(19)

(11) **EP 4 091 759 A1**

(12) **EUROPEAN PATENT APPLICATION**

(43) Date of publication:
**23.11.2022 Bulletin 2022/47**

(21) Application number: **21174614.4**

(22) Date of filing: **19.05.2021**

(51) International Patent Classification (IPC):
***B23K 26/03*** (2006.01) ***B23K 26/046*** (2014.01)
***B23K 26/04*** (2014.01) ***B23K 26/06*** (2014.01)
***B23K 26/067*** (2006.01) ***B23K 26/08*** (2014.01)
***B23K 26/352*** (2014.01) ***B23K 26/362*** (2014.01)
***B42D 25/435*** (2014.01) ***G02B 5/18*** (2006.01)
*B23K 37/04* (2006.01) *B23K 103/04* (2006.01)
*B23K 103/00* (2006.01)

(52) Cooperative Patent Classification (CPC):
**B23K 26/046; B23K 26/032; B23K 26/048; B23K 26/0604; B23K 26/0648; B23K 26/0676; B23K 26/0853; B23K 26/355; B23K 26/362; B42D 25/435; B44B 5/026; B44C 1/228; G02B 5/1857; G03H 1/028;** B23K 37/0461; (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Boegli-Gravures S.A.**
**2074 Marin-Epagnier (CH)**

(72) Inventors:
- **BOEGLI, Charles**
  **2074 Marin-Epagnier (CH)**
- **DUMITRU, Gabriel**
  **5415 Nussbaumen (CH)**
- **DROZ, Alain**
  **2075 Thielle (CH)**
- **TONIN, Mario**
  **2067 Chaumont (CH)**

(74) Representative: **Weihs, Bruno Konrad**
**André Roland SA**
**P.O. Box 352**
**1000 Lausanne 22 (CH)**

(54) **A DEVICE AND A METHOD FOR OPTICAL ENGRAVING OF A DIFFRACTION GRATING ON A WORKPIECE**

(57) A device for engraving a diffraction grating on a workpiece, comprises an optical set-up comprising a laser, a beam forming device, a beam splitting device, and a focusing head. The laser is configured to output a laser beam. The beam forming device is configured to control a diameter of and a light intensity distribution in the laser beam, and output a primary laser beam. The beam splitting device is configured for a splitting of the primary laser beam into a plurality of split beams for the engraving. The focusing head comprises a microscope objective lens (109) configured to focus the respective split beams in respective foci on the workpiece, an auto-focusing system configured to produce a positioning signal for adjusting and maintaining a distance between the microscope objective lens and the workpiece in order to maintain the respective foci of the split beams on the workpiece and output the positioning signal; and a micro-actuator configured to receive the positioning signal and adjust the distance between the microscope objective lens and the workpiece, whereby the auto-focusing system and the micro-actuator are operationally connected in a closed-loop. The device for engraving further comprises a positioning device configured to perform a relative positioning between the workpiece in the respective foci of the split beams, and the optical set-up; and a controller configured to control the positioning device and the laser according to engraving instructions for the diffraction grating.



Processed by Luminess, 75001 PARIS (FR)

(Cont. next page)

100
106
107
108
105
d
102
103
104
110
113
112
111
109
115
114
101

Figure 1

(52) Cooperative Patent Classification (CPC): (Cont.)
B23K 2103/04; B23K 2103/52; B23K 2103/54

## Description

### Technical Field

The present invention relates to a device and a method for engraving a diffraction grating on a workpiece, more precisely engraving by means of a laser, the beam of which is split in a plurality of split beams.

### Background Art

US publication US2009/0212030A1 concerns laser ablation at high pulse power with a working spot whose diameter is small and tightly controlled. It describes an invention which is an autofocus subsystem optimized to meet the particular constraints of high-precision ablation. It co-propagates the autofocus and working beams through most of the beam train to ensure that the autofocus will be affected by the same thermal changes as the working beam.

In this US publication, when the ablation process produces smooth-surfaced features, the most accurate autofocus reading may result when d=0, i.e., the autofocus focus on the workpiece and the working beam focus overlap. However, if the ablated surface is rough, the autofocus beam may be scattered, making its signal at the detector assembly too weak to read. In that case, d may be set >0, so that the foci do not overlap.

An object of the present invention is to realize a system for engraving a diffraction grating on a workpiece by means of a plurality of beams simultaneously. In order to reach this object, it is necessary to maintain the plurality of beams in focus on the surface of the workpiece, i.e., find a solution for the autofocus that can cope with a scattering nature of the diffraction grating being engraved or already present on the surface of the workpiece.

### Summary of the invention

In a first aspect, the invention provides a device for engraving a diffraction grating on a workpiece, comprising an optical set-up comprising a laser, a beam forming device, a beam splitting device, and a focusing head. The laser is configured to output a laser beam. The beam forming device is configured to control a diameter of and a light intensity distribution in the laser beam, and output a primary laser beam. The beam splitting device is configured for a splitting of the primary laser beam into a plurality of split beams for the engraving. The focusing head comprises a microscope objective lens (109) configured to focus the respective split beams in respective foci on the workpiece, an auto-focusing system configured to produce a positioning signal for adjusting and maintaining a distance between the microscope objective lens and the workpiece in order to maintain the respective foci of the split beams on the workpiece and output the positioning signal; and a micro-actuator configured to receive the positioning signal and adjust the distance between the microscope objective lens and the workpiece, whereby the auto-focusing system and the micro-actuator are operationally connected in a closed-loop. The device for engraving further comprises a positioning device configured to perform a relative positioning between the workpiece in the respective foci of the split beams, and the optical set-up; and a controller configured to control the positioning device and the laser according to engraving instructions for the diffraction grating.

In a preferred embodiment, the device for engraving further comprises a power regulator comprising an optical modulator configured to adjust a power of the laser beam.

In a further preferred embodiment, the device for engraving further comprises an engraving power control device configured to selectively mask at least one of the plurality of split beams, thereby limiting a total beam power incident on the workpiece to that of non-masked split beams.

In a further preferred embodiment, the beam splitting device comprises a Spatial Light Modulator (SLM).

In a further preferred embodiment, the auto-focusing system comprises a probe light source emitting a probe light beam, the probe light source being configured as a low coherence light source and the probe light source being further configured to direct the probe light beam to the workpiece through the microscope objective lens; an interferometry set-up comprising a reference path and a measuring path, configured to receive as the measuring path the probe light beam after reflection on the workpiece, and the reference path being obtained by sending the probe light beam over a determined path comprising a reference lens configured to mimic the microscope objective lens and a mirror configured to mimic the workpiece, further whereby the reference path is of a given fixed predetermined length such that the difference between the reference path's given fixed predetermined length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum; an optical spectrometer configured to read the interference spectrum output of the interferometry set-up and output an optical spectrum; a computing unit configured to input the optical spectrum from the optical spectrometer, analyze it and compute positioning data; a micro-actuator configured to move the microscope objective lens; and a digital/analog converter receiving the positioning data and outputting a driving signal to the micro-actuator in order to maintain the workpiece in the respective foci of the split beams.

In a further preferred embodiment, the auto-focusing system comprises a probe light source emitting a probe light beam, the probe light source being configured as a low coherence light source and the probe light being further configured to direct the probe light beam to the workpiece through the microscope objective lens; an interferometry set-up comprising a reference path and a measuring path, configured to receive as the measuring path the probe light beam after reflection on the workpiece, and the reference path being obtained by sending the probe light beam over a determined path comprising a reference lens configured to mimic the microscope objective lens and a mirror configured to mimic the workpiece, further whereby the reference path is of a given fixed predetermined length such that the difference between the reference path's given fixed predetermined length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum; an optical spectrometer configured to read the interference spectrum output of the interferometry set-up and output an optical spectrum; a computing unit configured to input the optical spectrum from the optical spectrometer, analyze it and compute positioning data; a micro-actuator configured to move the positioning device; and a digital/analog converter receiving the positioning data and outputting a driving signal to the micro-actuator in order to maintain the workpiece in the respective foci of the split beams.

In a second aspect, the invention provides a method for engraving a diffraction grating on a workpiece, comprising providing a laser beam; forming the laser beam by controlling a diameter and a light intensity distribution in the laser beam, and output a primary laser beam; splitting the primary laser beam into a plurality of split beams for engraving; focusing the respective split beams on the workpiece with a microscope objective lens; auto-focusing the respective split beams by producing a positioning signal for adjusting and maintaining a distance between the microscope objective lens and the workpiece in order to maintain the respective foci of the split beams on the workpiece, outputting the positioning signal; receiving the positioning signal at the input of a micro-actuator and performing with the micro-actuator an adjustment of the distance between the microscope objective lens and the workpiece, whereby the autofocusing and the adjustment of the distance are performed in a closed-loop; performing a relative positioning between the workpiece in the respective foci of the split beams, and the optical setup by means of a positioning device, and controlling the positioning device and the laser according to engraving instructions for the diffraction grating and engraving the diffraction grating on the workpiece.

In a further preferred embodiment, the method for engraving further comprises a step of adjusting a power of the laser beam by means of a power regulator that comprises an optical modulator.

In a further preferred embodiment, the method for engraving further comprises a step of controlling an engraving power by selectively masking at least one of the plurality of split beams, thereby limiting a total beam power incident on the workpiece to that of non-masked split beams.

In a further preferred embodiment, the splitting of the primary laser beam into a plurality of split beams for engraving comprised employing a Spatial Light Modulator (SLM).

In a further preferred embodiment, the step of auto-focusing comprises emitting a probe light beam with a probe light source, the probe light source being configured as a low coherence light source, the emitting comprising a directing of the probe light beam to the workpiece through the microscope objective lens; implementing an interferometry set-up with a reference path and a measuring path, whereby the probe light beam is directed in the measuring path to pass through the microscope objective lens and to reflect on the workpiece, and the probe beam is further split and directed in the reference path by sending the probe light beam over a determined path that comprises a reference lens configured to mimic the microscope objective lens and a mirror configured to mimic the workpiece, further whereby the difference between the reference path length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum; reading the interference spectrum output of the interferometry set-up by means of an optical spectrometer and outputting an optical spectrum; inputting the optical spectrum from the optical spectrometer in a computing unit and analyzing it and compute positioning data; moving the microscope objective lens by means of a micro-actuator; and receiving the positioning data in a digital/analog converter and outputting a driving signal to the micro-actuator in order to maintain the workpiece in the respective foci of the split beams.

In a further preferred embodiment, the step of auto-focusing comprises emitting a probe light beam with a probe light source, the probe light source being configured as a low coherence light source, the emitting comprising a directing of the probe light beam to the workpiece through the microscope objective lens; implementing an interferometry set-up with a reference path and a measuring path, whereby the probe light beam is directed in the measuring path to pass through the microscope objective lens and to reflect on the workpiece, and the probe beam is further split and directed in the reference path by sending the probe light beam over a determined path that comprises a reference lens configured to mimic the microscope objective lens and a mirror configured to mimic the workpiece, further whereby the difference between the reference path length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum; reading the interference spectrum output of the interferometry set-up by means of an optical spectrometer and outputting an optical spectrum; inputting the optical spectrum from the optical spectrometer in a computing unit and analyzing it and compute positioning data; moving the positioning device by means of a micro-actuator; and receiving the positioning data in a digital/analog converter and outputting a driving signal to the micro-actuator in order to maintain the workpiece in the respective foci of the split beams.

## Brief description of the figures

The invention will be better understood through the detailed description of preferred example embodiments of the invention, and in reference to the appended drawings in which

figure 1 is a schematic overview of a device for optical engraving of a diffraction grating according to an example embodiment of the invention;

figure 2 is a schematic overview of a device for optical engraving of a diffraction grating according to a further example embodiment of the invention;

figure 3 contains a flowchart illustrating a method for engraving of a diffraction grating on a workpiece according to an example embodiment of the invention;

figures 4A and 4B illustrate a prior art autofocusing system being used successfully in a case of a non-diffractive surface (4A) and how it can malfunction in case of a diffractive structure (4B);

figure 5 schematically illustrates a series of foci and an autofocus spot on a surface of a workpiece according to an example engraving using the invention:

figures 6A, 6B and 6C schematically illustrate a first engraving scenario at 3 different instants, according to the invention;

figures 7A, 7B and 7C schematically illustrate a second engraving scenario at 3 different instants, according to the invention;

figure 8 contains a photograph of engraved diffracted patterns resulting from the use of a prior art autofocusing system;

figure 9 contains a photograph of engraved diffracted patterns resulting from the present invention, according to an example embodiment;

figure 10 illustrates an autofocusing system based on Optical Coherence Tomography according to an example embodiment of the invention;

figure 11 is a schematic description of a focusing head with an autofocusing system according to an example embodiment of the device;

figure 12 illustrates schematically an engraving of a diffraction grating by means of split beams according to an example embodiment of the invention;

figure 13 is a schematic illustration of a beam forming device according to an example embodiment;

figure 14 contains a SLM beam splitting set-up;

figure 15 contains two example illustrations of beam splitting set-ups;

figure 16 contains a flowchart illustrating the algorithm for computing the phase of the SLM device according to an example embodiment;

figures 17A and 17B show two illustrations of a beam and a reconstruction plane, the first (17A) showing a configuration in which the zeroth order contributes principally to an over-powering in the engraving, and the second (17B) shows a shifted position of a reconstruction plane, where the beams of first order contribute principally to the engraving;

figure 18 illustrates a use of a Fresnel phase in an SLM in order to shift a reconstruction plane in respect to the zeroth order of created split beams;

figure 19 illustrates a power control mechanism comprising a beam masking device according to an example embodiment;

figure 20 illustrates a positioning device for the workpiece according to an example embodiment of the invention;

figure 21 illustrates a focusing of a split beam on a work piece surface according to an example embodiment of the invention;

figure 22 illustrates an example for an embossing set-up that uses an embossing roller structured according to the invention;

figure 23 illustrates an example for an injection molding set-up that uses an injection molding insert structured according to the invention;

figure 24 depicts a third use case example in which gratings have been engraved with a device according to the invention, on a wristwatch case;

figure 25 illustrates a further use case example in which gratings embossed with an embossing tool that was obtained with an engraving according to the invention, have been transferred to a film of a blister packaging;

figure 26 illustrates a further use case example in which gratings have been transferred from an engraved embossing roller that was obtained with an engraving according to the invention, to a food packaging; and

figure 27 illustrates a further use case in which gratings have been transferred from an engraved embossing roller that was obtained with an engraving according to the invention, in a film bearing a pre-cured polymer coating.

Same references will be used throughout the figures to designates features and items that are the same or similar.

**Detailed description of preferred embodiments of the invention**

The present invention relates to a device and a method for engraving a diffraction grating on a workpiece. The workpiece typically may comprise any one of metal, such as for example steel, ceramic or glass. A surface of the workpiece should comply with a certain standard of roughness in order for the diffraction grating to be able to appear as such and produce typical effects by diffracting incoming light. Hence the surface has a roughness standard better than N2. The workpiece may be for example of plan or cylindrical shape.

**Example embodiments of a device for engraving**

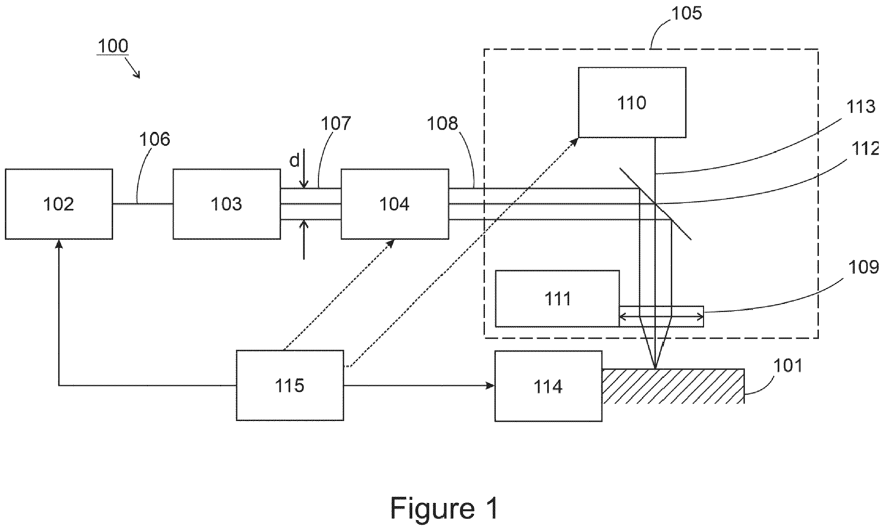

Referring to figure 1, this provides a schematic overview of an example embodiment of the device for engraving **100** of a diffraction grating (diffraction grating not illustrated) on a workpiece **101.**

The device for engraving **100** comprises an optical set-up comprising a laser **102,** a beam forming device **103,** a beam splitting device **104** and a focusing head **105.**

The laser **102** is configured to output a laser beam **106.**

The beam forming device **103** is configured to control a diameter **d** of the laser beam and a light intensity distribution (not illustrated) in the laser beams, and outputs a primary laser beam **107.**

The beam splitting device **104** is configured for a splitting of the primary laser beam **107** into a plurality of split beams **108** represented as one beam in figure 1 for an easier reading. The plurality of split beams **108** is for the engraving of the workpiece **101.**

The focusing head **105** comprises a microscope objective lens **109** which is configured to focus the respective split beams in respective foci (respective split beams and respective foci not illustrated) on the workpiece **101.** It further comprises an auto-focusing system **110** configured to produce a positioning signal for adjusting and maintaining a distance between the microscope objective lens **109** and the workpiece **101** in order to maintain the respective foci of the split beams on the workpiece **101,** whereby the auto-focusing system **110** is further configured to output the positioning signal.

In a preferred embodiment the distance between the microscope objective lens **109** and the workpiece **101** may be adjusted according to the positioning signal by means of a micro-actuator **111.** A beam splitter **112** may be configured to deviate the plurality of split beams **108** inside the focusing head **105** and allow a measuring beam **113** output from the auto-focusing system **110** to extend between the auto-focusing system **110** and the workpiece **101.**

The device for engraving **100** of a diffraction grating further comprises a positioning device **114** configured to perform a relative positioning between the workpiece **101** in the respective foci of the split beams, and optical set-up, more particularly the focusing head **105.**

A controller **115** is configured to control the positioning device **114** and the laser **102** according to engraving instructions (not illustrated) for the diffraction grating.

In a preferred embodiment, the control may further be configured to control the splitting device **104** and / or the auto-focusing system **110.**

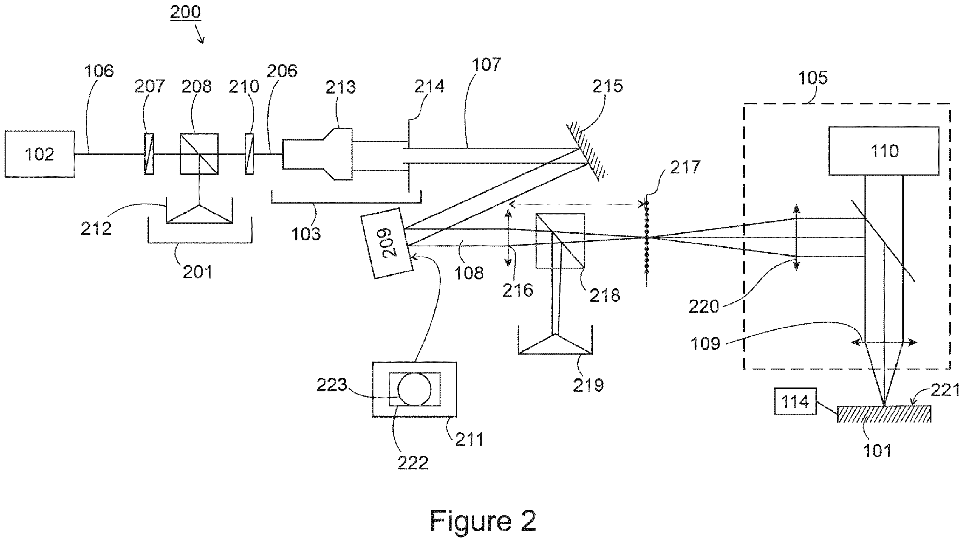

Referring now to figure 2, this contains a schematic overview of a device for optical engraving **200** of a diffraction grating according to a further example embodiment of the invention.

In figure 2, the controller **115** is left out, i.e., not illustrated, for a better readability, but it is however a feature of the device **200** and may be connected in a similar manner as explained in figure 1.

In the example of figure 2, the laser **102** may output a pulsed femtosecond laser beam **106** with a wavelength of 515 nm, a pulse duration less than 1000 fs, a frequency in the range of 50 to 200 kHz, an average power of less than 5 W, linearly polarized and with a Gaussian distribution of intensity.

A power regulator **201** is placed in the laser beam **106** to reduce a total power of the laser beam and output a laser beam **206.** In that goal, the laser beam **106** passes through a first half wave plate **207** configured to rotate the polarization. A first polarizing beam splitter **208** then filters the laser beam, splitting a part of it to a beam dump **212.** In a preferred embodiment the power of the laser beam **206** may be reduced and adjusted to less than 1 W. This approach is particularly useful when the laser is too powerful for components of the optical set-up, e.g., for a beam splitting device **209** which may be realized as a SLM (Spatial Light Modulator) head and could be damaged. A second half wave-plate **210** rotates the polarization of the laser beam so that it coincides with the optimized polarization of an SLM screen **211** of the SLM head **209.**

The power adjusted laser beam **206** is then directed through the beam-forming device **103.** This beam-forming device **103** preferably comprises a beam expander **213** that is configured to widen the size of the laser beam **206,** e.g., for example with a magnification greater than 2x, to obtain the primary laser beam **107** which is an expanded beam. An iris **214** is inserted in the expanded beam to select a centre part of the expanded beam. The selected centre part of the expanded beam, which corresponds to the primary laser beam **107,** can be approximated to a flat distribution because of the combination of the large Gaussian profile and the small iris. It is noted that this approach is considered to be better than the use of a beam-forming device such as a top hat shaper (not illustrated) because such a top hat shaper is very sensible to the orientation, positioning and size of the input beam, whereas the illustrated approach here is less prone to positioning errors. However alternative beam-forming devices may be considered to implement the present invention.

The primary laser beam **107** is directed over a reflector **215** to the centre of the SLM screen **211.** The iris **214** of the beam-forming device **103** is set so that the size of the primary laser beam **107** matches a size of an active part of the SLM screen **211.** On the SLM screen **211,** we display a phase image inside an active area **222** of the SLM screen that is going to change the phase of the laser primary beam **107,** falling on an area **223** which is within the active area **222** of the SLM screen. The SLM screen **211** may comprise an LCoS (Liquid Crystal on Silicon) display capable of shifting the incoming phase of light between 0 and 2pi. The phase to display may be calculated using a Gerchberg-Saxton algorithm to generate the plurality of split beams **108,** i.e., an array of split beams separated by a given distance.

Back to the setup of figure 2, a reconstruction lens **216** after the SLM screen **211** is configured to focus individual phase shifted laser beams from the plurality of split beams **108** into a reconstruction plane **217** where the split beams first appear. In the reconstruction plane **217,** the zeroth order of the reconstructed phase (not referenced in figure 2) may be an issue for the homogeneity of the plurality of split beams **108.**

A second polarizing beam splitter **218** and second beam dump **219** is placed in the plurality of split beams **108** to filter a part of a laser beam that would have otherwise contributed to the zeroth order.

An optional Fresnel phase (not illustrated) may be added to the computed phase on the SLM screen **211** so that the reconstruction plane **217** of the split beams **108** does not coincide with the focal plane (not illustrated) of the reconstruction lens **216.** In doing so, the reconstruction lens **216** focuses the zeroth order before or after the reconstruction plane **217** depending on the Fresnel phase that is used. The Fresnel lens parameters (its focal length) may be chosen so that the reconstruction plane **217** where the split beams **108** are reconstructed is shifted by a desired amount (e.g., greater than 10 mm) from the focal plane of the reconstruction lens **216.** Because the zeroth order will be focused into the focal plane of the reconstruction lens **216,** the zeroth order is no longer in focus at the same time as the split beams **108,** the energy from the zeroth order is spreading over a large area in the reconstruction plane **217** and will not interfere with the split beams **108.**

The focusing head **105,** in the set-up of figure 2, comprises a tube lens **220** having for example a focal length of 200 mm. The tube lens **220** is configured to send an image from the reconstruction plane **217** to infinity, toward the microscope objective lens **109,** which may be realized as an infinity corrected microscope objective. This infinity corrected microscope objective is required as it will be moved along its optical path for the autofocusing.

In a preferred embodiment. The microscope objective lens **109** may have a magnification greater than 20x, a Numeral Aperture greater than 0.35, a focal length smaller than 10 mm and a depth of field of smaller than 10 $\mu$m.

The microscope objective lens **109** creates the image of the reconstruction plane **217** with a reduction factor that is in direct relation to the magnification of the microscope objective lens **109** and the tube lens **220.**

Because of the shallow depth of field of the microscope objective lens **109,** it is necessary to carefully adjust the focus so that the image of the reconstruction plane **217** where the split beams **108** are located is coincident with a surface **221** of the workpiece **101.**

The workpiece **101** may be moved to the focus position using the positioning device **114.** This is done in a closed-loop manner. When the workpiece **101** is in position, the close adjustment of the focus may be performed using a micro-actuator (not illustrated in figure 2 for a better readability but known from figure 1 where it has the reference **111**), for example a piezo electric drive that is moving the microscope objective lens **109** a few micrometres, until the perfect focusing position is reached. Alternatively, the micro-actuator may be applied to the positioning device **114.** In a further alternative embodiment, each of the positioning device **114** and the microscope objective lens **109** may be adjusted for focusing using individual respective micro-actuators. Instead of the piezo electric drives, it would also be possible to use micro-adjustment motors or other appropriate types of micro-actuators.

A controller is sending inputs to the positioning device according to engraving instructions, to move the workpiece laterally in front of the microscope objective in order to engrave the grating. During this motion, the workpiece may drift away from the focusing position.

The controller (not illustrated in figure 2 but known from figure 1 where it carries the reference **115**) is further configured to switch the laser **102** on and off depending on the needs for engraving expressed in the engraving instructions (also not illustrated).

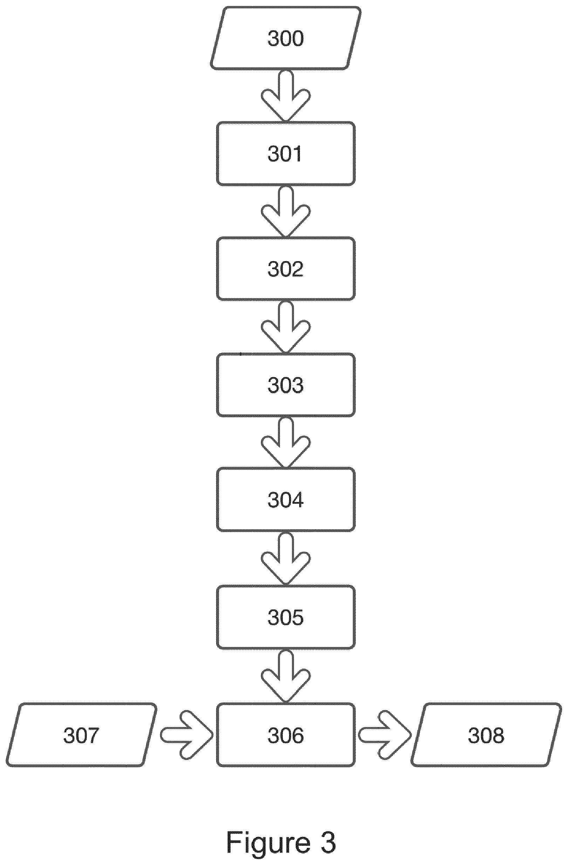

Figure 3 contains a flowchart illustrating a method for engraving the diffraction grating on a workpiece according to an embodiment of the invention. The method comprises in step **300** providing a laser beam. In step **301** the laser beam is formed by controlling a diameter and a light intensity distribution in the laser beam and outputting a primary laser beam. In step **302** the primary laser beam is split into a plurality of split beams for engraving. In step **303** the respective split beams are focused on the workpiece with a microscope objective lens. In step **304** the respective split beams are auto-focused by producing a positioning signal for adjusting and maintaining a distance between the microscope and objective lens and the workpiece in order to maintain the respective foci of the split beams on the workpiece. The auto-focusing comprises outputting a positioning signal. In step **305** the positioning signal is received at the input of a micro-actuator and the micro-actuator performs an adjustment of the distance between the microscope objective lens and the workpiece, whereby the autofocusing and the adjustment of the distance are performed in a closed-loop manner. In step **306** a relative positioning is performed between the workpiece in the respective foci of the split beams, and the optical setup by means of a positioning device, and the positioning device and the laser are controlled according to engraving instructions **307** for the diffraction grating and the diffraction grating **308** is engraved.

The autofocusing system **110** tracks the surface **221** during the engraving to keep it in the depth of field of the microscope objective lens **109.**

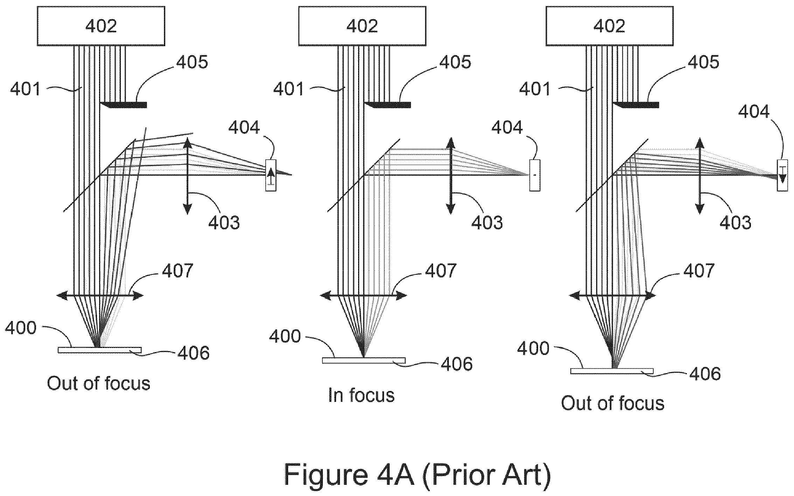

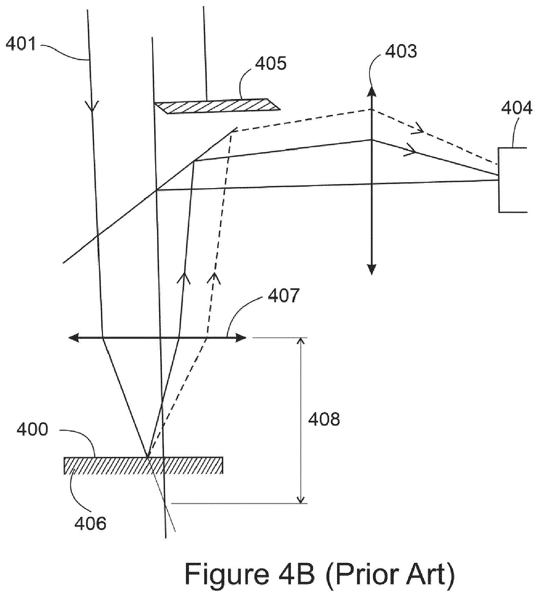

The applicant found that when using prior art autofocus systems, these showed that the engraving of diffractive structures was perturbing their autofocusing mechanism. In most comparatively "fast" commercial autofocusing systems, the autofocusing is done using the Foucault method, where a probe laser beam **401** is split in half by a knife-edge **405** as is illustrated in figures 4A and 4B that contain schematic illustrations of the manner in which an autofocusing system using the Foucault method works. The surface to follow **400** reflects the probe laser beam **401** from laser **402** and a lens **403** images the probe laser beam **401** on a sensor **404.** Depending on the position of the image of the probe laser beam **401,** the autofocusing mechanism can detect a displacement of the workpiece **406.** This is shown by examples in figure 4A, where on the position illustrated on the left side part of figure 4A and the position illustrated on the right-side part of figure 4A, the workpiece **406** is out of focus, and on the position in the middle part of figure 4A, the workpiece **406** is in focus. An autofocus computer (not illustrated in figure 4A and figure 4B) can then compute the displacement from the focus position using the centroid position (the position in the middle part of figure 4A). The autofocus computer then sends a correction signal to an actuator (not shown in figure 4A) to adjust the position of the workpiece **406,** by either moving a microscope objective lens **407** or the workpiece **406,** the microscope objective lens **407** having an objective focal length **408.** Eventually, this kind of autofocus can follow the surface **400** if that surface **400** is in focus or not.

This method is sensitive to the reflection of the probe laser beam **401** and is not well adapted in the case in which the surface **400** is covered with diffractive structures, such as the ones we are engraving in the present invention. When the microscope objective lens **407** is out of focus, the structures on the surface **400** on the workpiece **406** are going to diffract the probing laser. This is going to change the angle of reflection of the probe laser beam **401** and the centroid of the reflection on the sensor **404** is not going to give the real position of the workpiece **406.** Therefore, the correction signal sent to the actuator will be wrong and the objective lens **407** will not reach focus efficiently.

Several cases of autofocus scenarios can occur as will become apparent from the following explanation. Typically, the autofocus system can interfere directly with the gratings being engraved or the grating that were engraved in an earlier part of the engraving process.

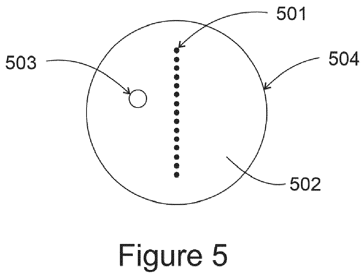

Figure 5 schematically illustrates a series of foci **501** from focused split beams of a device for optical engraving of a diffraction grating (split beams and device not illustrated in figure 5) on a surface **502** of a workpiece and an autofocus spot **503** produced by the autofocusing system (not illustrated in figure 5) of the device. The autofocus spot **503** is projected on the surface **502** in proximity of the foci **501** inside a field **504** of the microscope objective lens (not illustrated in figure 5) of the device for optical engraving of a diffraction grating.

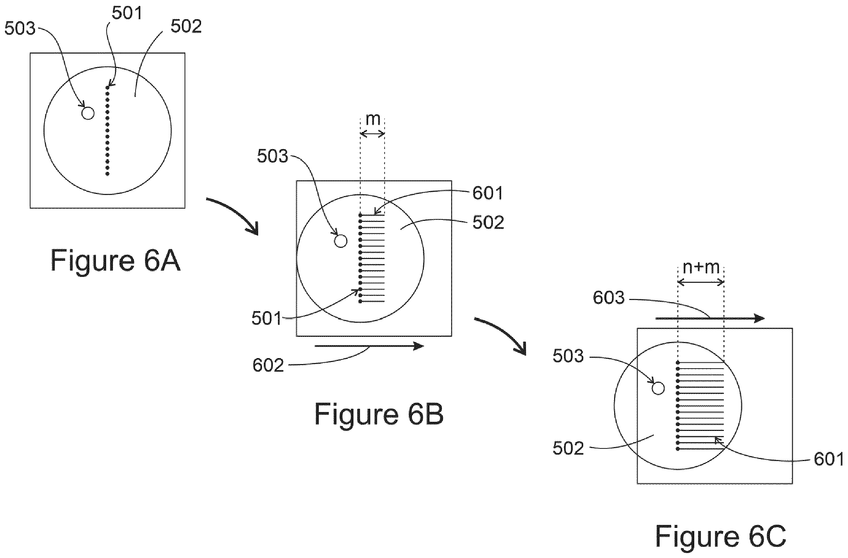

Referring now to figures 6A, 6B and 6C, these illustrate a first engraving scenario where a motion of the workpiece during engraving is such that the focusing spot **503** is never directly over a grating **601** being engraved. Figure 6A illustrates the initial position of the workpiece's surface **502** similar as in figure 5, whereas figure 6B shows the grating **601** having been engraved after the workpiece's surface **502** has been moved along direction **602** by a distance **m,** and figure 6C shows the grating **601** having been engraved after the workpiece's surface **502** has been moved along the direction **603** by a distance **n+m.** The autofocus spot **503** remains on the surface **502** and away from the grating **601** at all times.

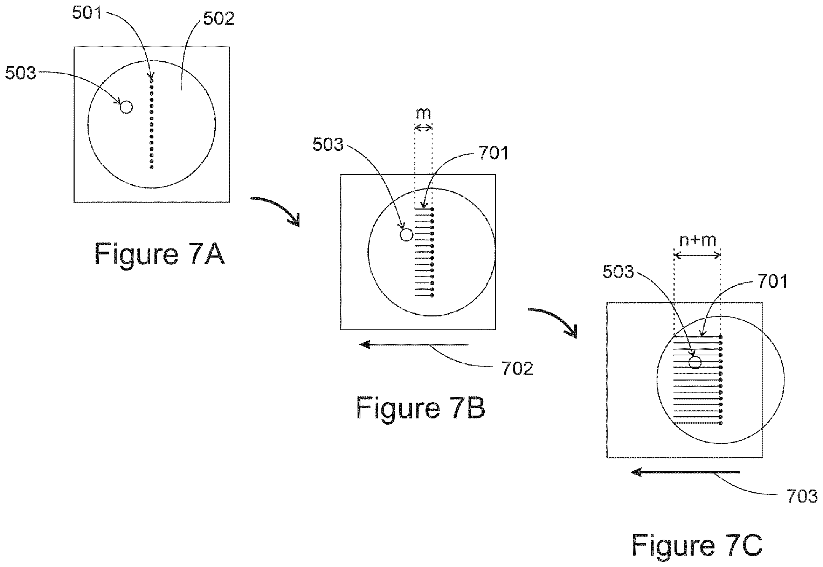

Referring now to figures 7A, 7B and 7C, these illustrate a second engraving scenario where the motion of the workpiece's surface **502** is such that the focusing spot **503** may cross the grating **701** after the grating **701** has been engraved, and may cause the autofocus known from prior art to malfunction. Figure 7A illustrates the initial position of the workpiece's surface **502** similar as in figure 5, whereas figure 7B shows the grating **701** having been engraved after the workpiece's surface **502** has been moved along direction **702** by a distance **m** and the focusing spot **503** is at the border of the grating **701** but not yet affected by the grating **701,** and figure 7C shows the grating **701** having been engraved after the workpiece's surface **502** has been moved along the direction **703** by a distance **n+m** and the focusing sport **503** is reflected on the grating **701.** Hence in figure 7C the grating **701** may cause the autofocus known from prior art to malfunction because the reflected focusing spot **503** becomes too diffuse.

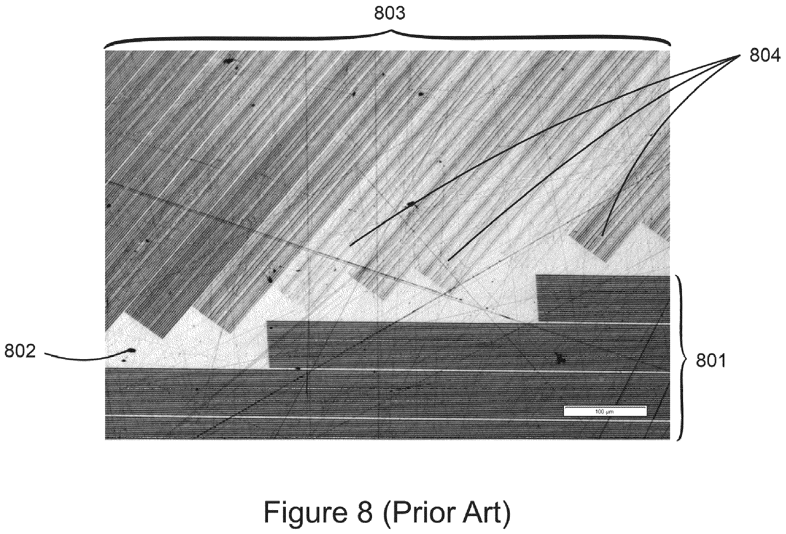

Referring now to figure 8, this illustrates a third engraving scenario in which the autofocus spot implemented according to prior art autofocusing system's technology (not illustrated in figure 8) may cross the path of a first diffractive structure **801** already present on a surface **802** of the workpiece, which can cause the autofocus to malfunction (autofocus not illustrated in Figure 8). Figure 8 illustrates by means of a photograph, various engravings of the surface **802** including the first diffractive structure **801** and a second diffractive structure **803,** each diffractive structure comprising a set of linear structures substantially parallel among each other. The linear structures of the first diffractive structure **801** have been engraved first on the initially smooth surface of surface **803,** and during this engraving which was made according to the scenario of figures 6A to 6B, the autofocus was not perturbed. Hence the lines of the diffractive structure **801** all have a comparatively equal appearance in the photograph. For the engraving of the linear structures of the diffractive structure **803,** a same scenario as in figures 6A to 6B was applied, and the autofocus had to be swept above the vertical linear structures of the first diffractive structure **801,** which perturbed the position reading and lead to the out of focus parts of the linear structures of the second diffractive structure **803,** represented by lighter parts **804** of the linear structures.

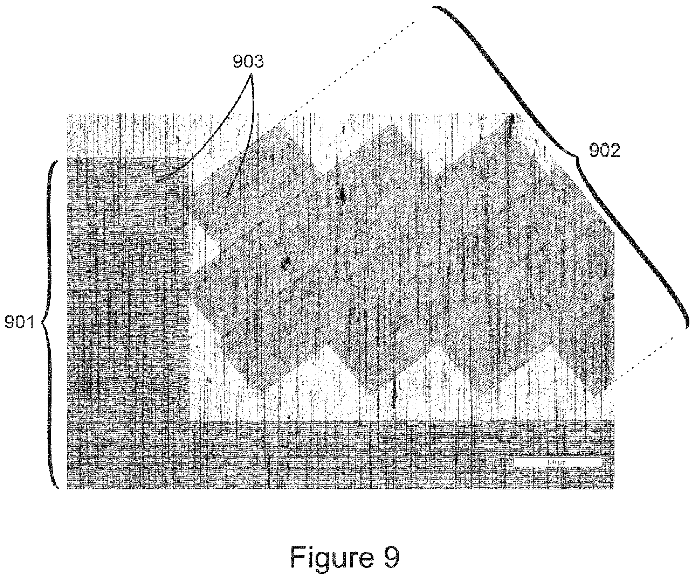

The applicant of the present patent application implemented a novel type of autofocusing system that is insensitive to such diffractive patterns on the surface of the workpiece. In contrast to the results illustrated in figure 8, the engraving of diffraction gratings on a workpiece with a plurality of split beams and the novel type of autofocusing system enables to obtain an even quality of the linear structures as illustrated in figure 9 by means of a photograph, which illustrates diffractive structures **901** and **902** in which the respective linear structures all have the same quality, as indicated by the constant filling **903** used to illustrate the linear structures.

The solution involved the developing of an autofocus system **110** based on the principle of Optical low-Coherence Interferometry / Tomography (OCT).

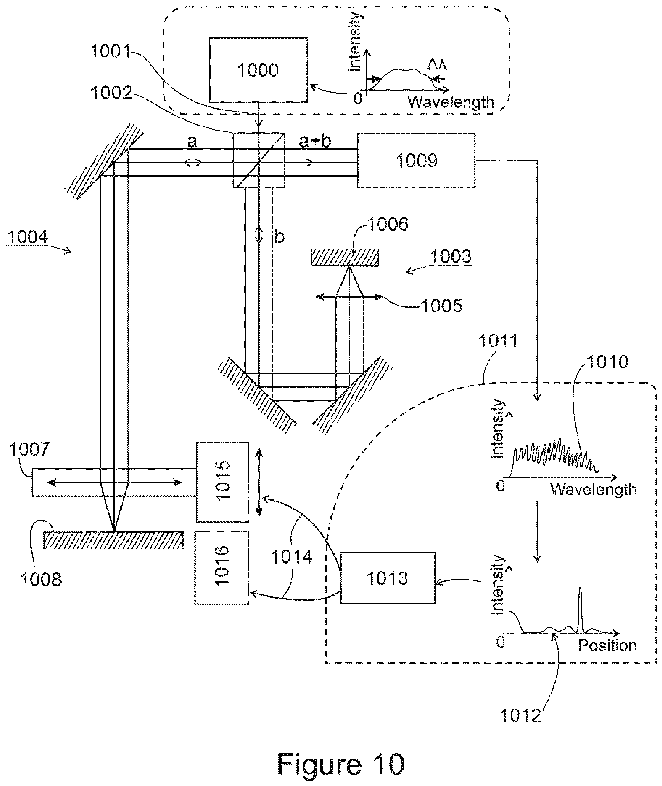

Referring to figure 10, this schematically illustrates an example embodiment of the autofocusing system according to the invention. The autofocusing system uses a low coherence light source **1000** to emit a probe light beam **1001.** The low coherence refers to a spectral bandwidth of several nm. The probe light beam **1001** goes through an interferometric setup. A beam splitter **1002** divides the probe light beam **1001** into two parts **a** and **b.** The part **a** of the probe light beam **1001** goes in a second arm of the interferometer that is a measurement path **1004.** The part **b** of the probe light beam **1001** goes in one arm of the interferometer that is a reference path **1003.** The difference between a reference path's length **1003** and a measurement path's length **1004** is smaller than the coherence length of the low coherence light source **1000** close to the length of the measurement path **1004.** At the end of the reference path **1003** is a lens **1005** and a mirror **1006** that are mimicking a microscope objective **1007** and a workpiece surface **1008.** On the measurement path **1004,** the probe light beam a goes through the microscope objective **1007** and reflects on the workpiece surface **1008.** The probe light beam **a** from the measurement path **1004** and the probe light beam **b** from the reference path **1003** are then combining **a+b** through the beam-splitter **1002** and interfere. An optical spectrometer **1009** then captures the interference spectrum between the two probe light beams **a+b** and sends a recorded spectrum **1010** to a computer **1011** where an algorithm performs a Fourier transform on the recorded spectrum, obtains from the Fourier transform a series of peaks corresponding to reflections on each surface in the optical path, and filtering the peaks to isolate the peak corresponding to the reflection on the workpiece, and to determine from the latter peak a relative position **1012** of the workpiece surface from the microscope objective **1007.** The positioning data **1013** is computed from the relative position **1012** and a predefined reference position of the workpiece surface **1008.** The determining of the relative position of the workpiece surface from the microscope and the computing from the relative position and a predefined reference position of the positioning data is done according to methods and computing technique well known in the area of Optical Coherence Tomography and will not be detailed anymore in the present description.

From that positioning data **1013,** and from the desired position of the workpiece **1008,** the computer **1011** then gives a correction signal, i.e., a driving signal **1014** to a microactuator **1015,** e.g., a piezoelectric actuator that moves the microscope objective lens **1007** so that the surface **1008** of the workpiece stays in focus of the microscope objective lens **1007.** Alternatively, or in addition, the driving signal may also be directed to a positioning system **1016** to move the surface **1008** of the workpiece to stay in focus of the microscope objective lens **1007.**

The autofocusing system and the micro-actuator are operationally connected in a closed-loop in order for continuously monitoring and adjusting the distance between the workpiece and the microscope objective lens.

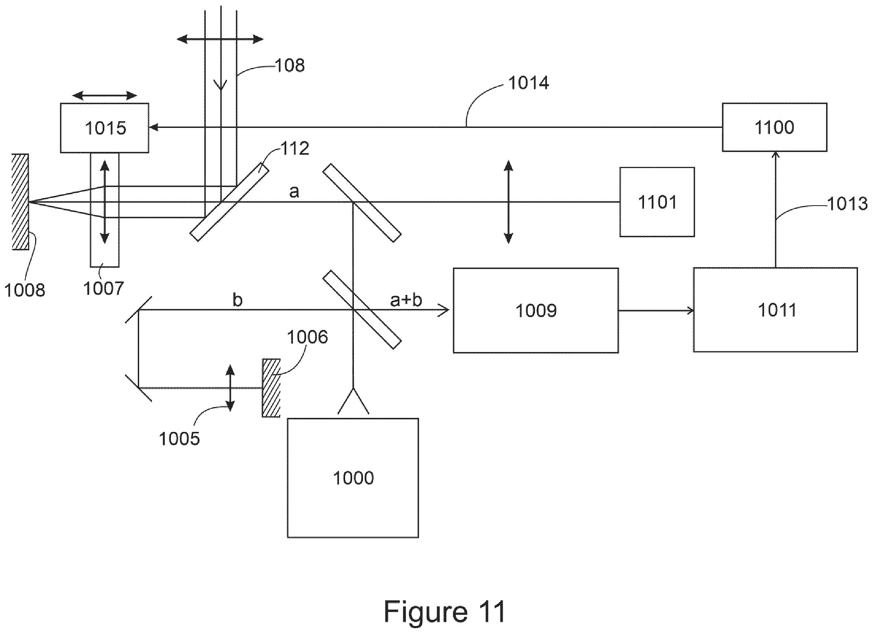

As shown in figure 11, which contains a schematic description of a focusing head with an autofocusing system according to the invention, the computer **1011** may comprise a digital / analogue converter **1100** that is configured to receive the positioning data **1013** and output this as the driving signal **1014.** In figure 11, the plurality of split beam **108** is also coupled through the microscope objective lens **1007** by means of the beam splitter **112.** An optional CCD camera **1101** is configured to receive light reflected from the surface **1008** for live observation of the surface **1009**

The autofocus needs to work at comparatively high speed to follow the motion of the workpiece. The autofocus may for example work at sampling rates above 10 Hz, so that the position is following closely the surface at all times, i.e., in the closed-loop. The axes of the positioning system **1016** may for example move at a speed of 1 mm/s, which means that the autofocus checks and adjusts the position of the focus at the most every 100 microns of displacement of the axes.

The reflection of the probe light beam **a** on the workpiece **1008** surface may be comparatively strong and therefore may overshadow reflexions from the internal optics of the microscope objective and the other optical elements in the path. A simple data filtering may resolve the actual position of the workpiece surface **1008.**

Because the OCT type autofocus does not rely on the way the light is reflected on the surface, it is not sensitive to the diffractive structures and can be used efficiently in the case where the surface to follow is being engraved with the diffractive structures. In addition, the OCT type autofocus is also efficient when engraving a surface that already carries a diffracting structure, i.e., when the diffracting structure being engraved is being superposed on an existing diffracting structure.

**Laser Source**

The laser source that provides the energy for engraving may be chosen from a wide variety of laser sources.

It may be necessary to limit the laser power and pulse duration because of the heating of the SLM head. Hence these parameters need to be carefully adjusted. The SLM LCoS head is very sensitive to changes of temperature and should preferably be cooled. Also, incident light with a power that exceed the power threshold of the SLM head can permanently damage it.

Practically, in commonly available SLM devices, if the peak power density on the SLM is above 20 $MW/cm^2$, there is a damage risk on the LCoS. For a CW laser, the damage threshold is an average density power of 60 $W/cm^2$ with a cooled SLM head.

For precise laser ablation, a preferred embodiment is to work with a femtosecond laser. However, a picosecond laser may also work in this application. Even larger pulse durations may work, but the result would possibly be degraded by the thermal effect on the surface we are engraving.

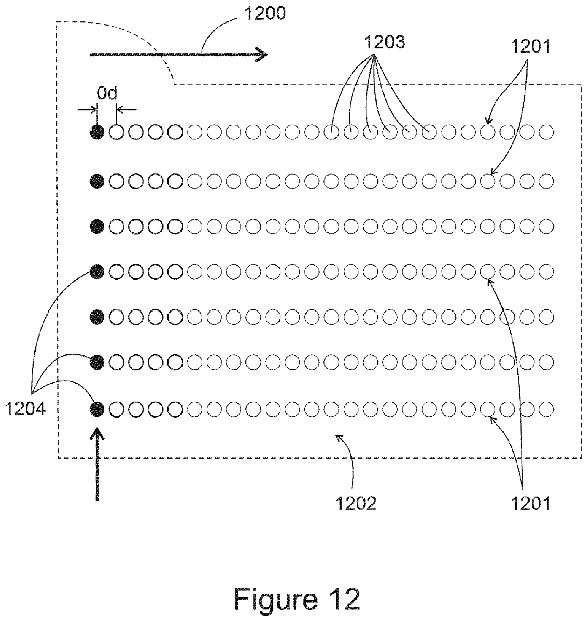

Referring to figure 12, this illustrates schematically an engraving of a diffraction grating by means of split beams according to an example embodiment of the invention. A plurality of laser impact spots from a plurality of split beams (split beams not illustrated) have been produced in lines **1201** on a surface **1202** of a workpiece. Preferably, the laser frequency is chosen to be between 1 kHz and 10 MHz (laser not illustrated in figure 12). The frequency of the laser depends on the speed at which the surface of the workpiece is moving, the movement being indicated by an arrow **1200** and the desired distance between two successive laser impulses as indicated by the distance 0d between two successive laser impact spots on the surface **1202.** Repeated aligned impacts **1203** illustrated with white circles, of the split beam distribution (which is illustrated by black circles **1204**) create a grating structure. Typically, if the laser frequency is higher, we may obtain the same distance 0d between successive laser impact spots by moving the surface of the workpiece at a faster speed.

The wavelength of the laser is preferably chosen to be 515 nm. It may however be of any value as appropriate.

The polarization state of the laser is preferably linear because the LCoS screen is sensitive to polarization and works only on horizontally polarized light. If the laser light is not polarized, one could add a polarizing step, which is relatively straightforward.

**Microscope objective lens**

The microscope objective lens may be any type of microscope objective lens used for laser engraving.

For the engraving of optical gratings, we need to have a small focusing spot, at most half of the desired period. If we want to engrave gratings with a period of 1 $\mu$m, this means that the maximum focusing spot diameter for the split beams is 500 nm.

From this information, one can find the required relationship between the objective's numerical aperture and the laser wavelength according to the formula:

$$\text{(focusing spot diameter)} \approx 2/\text{pi} * \text{wavelength} / \text{(numerical aperture)}$$

We can therefore understand that for better results, the wavelength must be small and the numerical aperture large.

For a "blue/UV" wavelength of 343 nm for instance, the numerical aperture of the objective must be at least 0.44 to have a focusing spot diameter of 500 nm.

For a "green" wavelength of 515 nm, the objective numerical aperture must be at least 0.66.

For an "infrared" wavelength of 1030 nm, the objective numerical aperture must be at least 1.3, which is not possible without an immersion objective, which is not an option for the present application.

Additionally, the minimum distance between two split beams is of considerations as well. If a SLM is used, this minimum distance depends on the SLM screen resolution and the focal length of the reconstruction lens by the formula:

$$\text{(minimal reconstruction separation)} = 2 * \text{(reconstruction lens focal)} * \text{wavelength} / \text{(SLM pixel width)} / \text{(width of the SLM in pixels)}$$

Increasing the number of pixels on the SLM (and therefore increasing the size of the beam), as well as reducing the wavelength and the focal length of the reconstruction lens can help in reducing the minimal reconstruction separation. This approach is limiting as spherical aberration will become predominant when decreasing the wavelength and decreasing the focal length of the reconstruction lens. A better approach is to use the fact that the microscope objective lens will have a given magnification and act as a reducer to project the image of the reconstruction plane on the surface of the workpiece.

In case a different beam splitter is used than a SLM, we have different analogue parameters, the adjusting of which is well known to the person skilled in the art and will not be discussed here in greater detail.

**Beam forming device**

The power adjusted laser beam **206** is then directed through the beam-forming device **103.** This beam-forming device **103** preferably comprises a beam expander **213** that is configured to widen the size of the laser beam **206,** e.g., for example with a magnification greater than 3x, to obtain the primary laser beam **107** which is an expanded beam. An iris **214** is inserted in the expanded beam to select a centre part of the expanded beam. The selected centre part of the expanded beam, which corresponds to the primary laser beam **107,** can be approximated to a flat distribution because of the combination of the large Gaussian profile and the small iris combination.

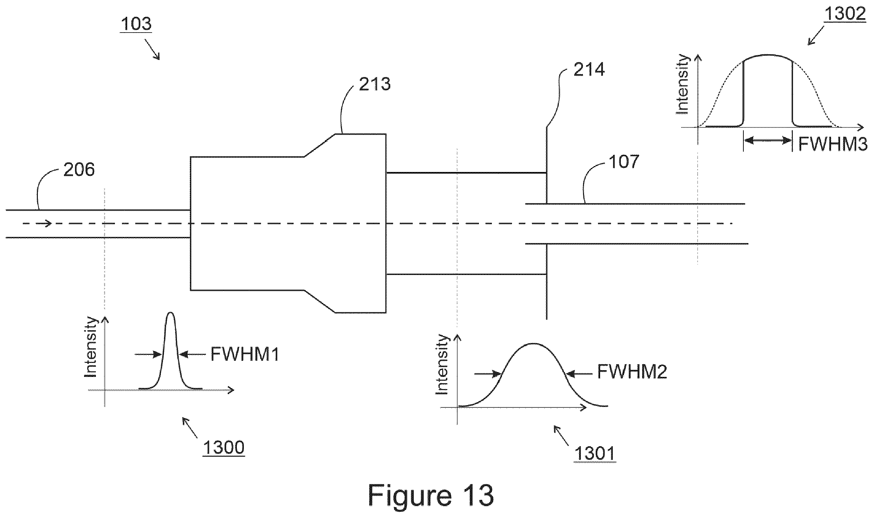

Referring to figure 13, this shows a schematic illustration of a beam forming device according to an example embodiment of the invention. It is similar to that shown in the set-up of figure 2, in that it shows the power adjusted laser beam **206** being directed through the beam-forming device **103.** The beam-forming device **103** comprises the beam expander **213** that is configured to widen the size of the laser beam **206** to obtain the primary laser beam **107** which is an expanded beam. The iris **214** is inserted in the expanded beam to select the centre part of the expanded beam. The selected centre part of the expanded beam, which corresponds to the primary laser beam **107,** can be approximated to a flat distribution because of the combination of the large Gaussian profile and the small iris combination.

The beam forming device **103** could comprise any element that is configured to shape the power adjusted laser beam **206** with a first gaussian intensity distribution having a full width at half maximum FWHM1 as illustrated in graph **1300** first into a second wider gaussian intensity distribution having a full width at half maximum FWHM2 > FWHM1 as illustrated in graph **1301** into the primary laser beam **107** that has a top hat intensity distribution having a full width at half maximum FWHM3 as illustrated in graph **1302.**

Such element may for instance comprise holographic plates that can create any sort of arbitrary beam distribution.

One might also use a series of optical elements that have a shape designed to morph the gaussian distribution into a top hat (such as a refractive beam forming device).

Preferably, the invention makes use of a specific beam shape and diameter of the primary laser beam **107** for which the holographic element or the optical elements are specifically created. Additionally, they require a very fine alignment to achieve the desired result.

**Beam splitting device**

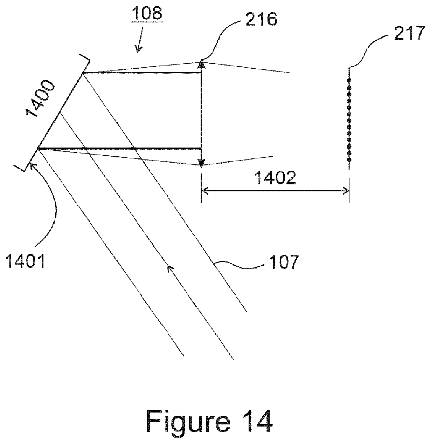

The present invention preferably makes use of a SLM (Spatial Light Modulator) for creating the split beam. One example SLM beam splitting set-up is illustrates schematically in figure 14 in which the primary laser beam **107** reaches and reflects on a Liquid Crystal on Silicon (LCoS) display **1401** of a SLM **1400** to obtain the plurality of split beams **108.** The latter are then directed through the reconstructions lens **216** to be focussed as corresponding multiple points in the reconstruction plane **217,** which is distant from the reconstruction lens 216 by a reconstruction length 1402.

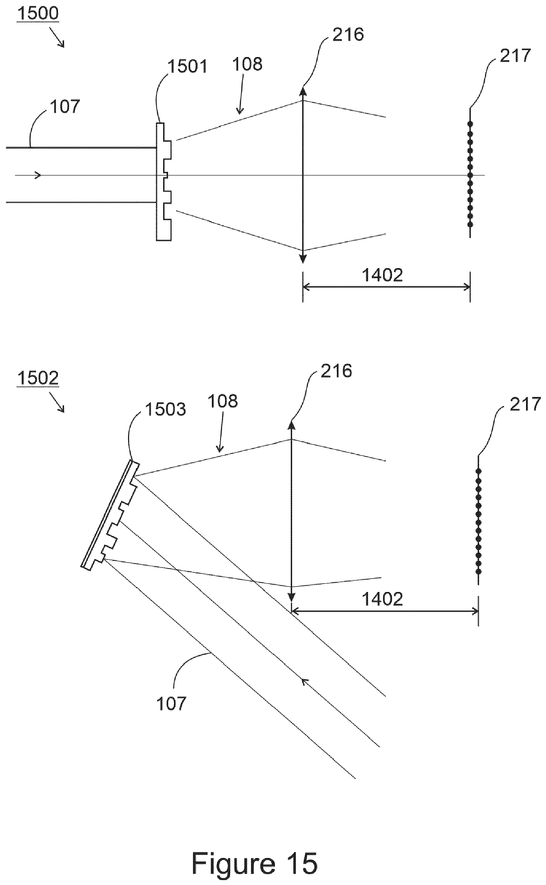

Referring to figure 15, in further embodiments, the invention may make use of different beam splitting devices such as for example a set-up **1500** with a holographic plate in transmission **1501** or a set-up **1502** with a holographic plate in reflexion **1503** that respectively will split the incoming primary laser beam **107** into any desired configuration of split beams **108.**

Another example not illustrated may be a set-up in which the holographic plate is fixed on a rotating mount to rotate the split beam distribution. The holographic plate may be used with or without a focusing lens to create the distribution of split beams.

A further example not illustrated may involve the use of a grating (in transmission or in reflexion) such as a Dammann grating in place of the SLM to generate a distribution of split beams after being focused by a lens. This is similar to the set-up with the holographic plate.

A further example not illustrated may involve the use of a SLM where the phase is changing constantly and in which case, there is the possibility to change on the fly the number of split beams, while doing the engraving. It is then also possible to change some parameters of the split beams on the fly, such as the distance between the split beams or their distribution in the reconstruction plane.

**Spatial Light Modulator (SLM)**

The Spatial Light Modulator is, by definition, a device that modifies the phase of a laser beam that it interacts with.

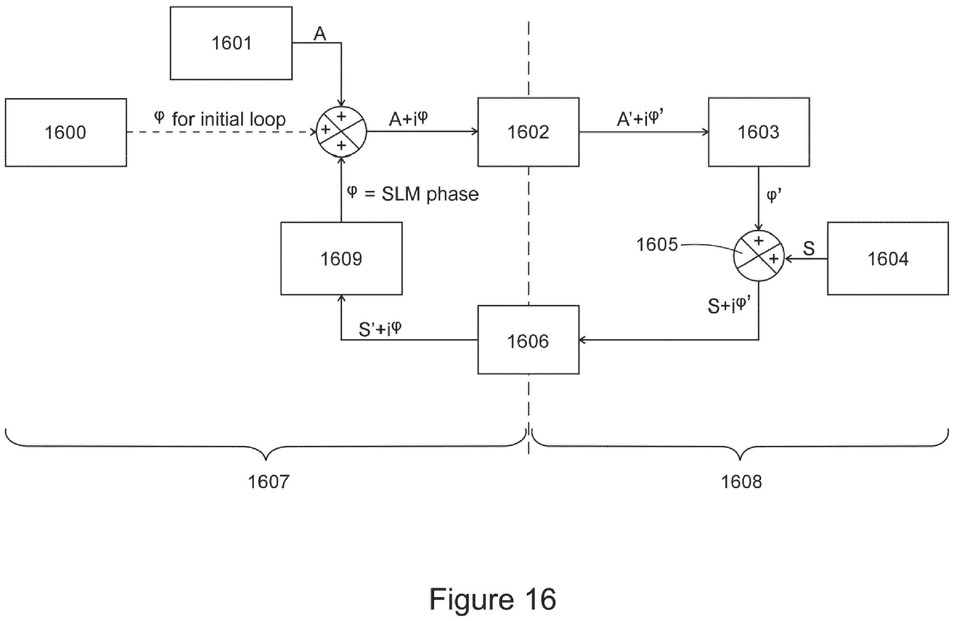

For a given split beam distribution to be obtained by means of the SLM, we compute the phase to be displayed with an iterative phase retrieval Fourier algorithm such as the Gerchberg-Saxton algorithm. Figure 16 contains a flowchart illustrating an algorithm for computing the phase of the SLM device according to an example embodiment.

In the algorithm of figure 16, we start with a random phase $\varphi$ referenced by **1600** and a constant amplitude **1601** which corresponds an amplitude **A** of the laser used. We make the Fourier transform **1602** of the complex image **A+i**$\varphi$ (i is the imaginary unit symbol) composed of the random phase $\varphi$ and constant amplitude **A.** The result of this Fourier transform **1602** is effectively the reconstruction plane **1608.** We calculate the phase $\varphi'$ of the resulting image **1603** representing the reconstruction plane and add **1605** a desired split beam distribution **S 1604** as the amplitude of the new complex image. We then take this complex image S+i$\varphi'$ and do an inverse Fourier transform **1606** to obtain a new complex image **S'+i**$\varphi$ to go back to the SLM screen **1607.** We then extract **1609** the phase $\varphi$ from this new complex image, which is the phase that needs to be sent to the SLM to display the desired split beam distribution (not illustrated).

The reconstruction efficiency may be improved by running this algorithm as a loop several times, e.g., between 1 and 100 times.

After the SLM we place a reconstruction lens in order to make the Fourier transform on the phase of the light and obtain the desired split beam distribution in the Fourier plane of the lens. This is illustrated for example in figure 2 by the feature having the reference **216.**

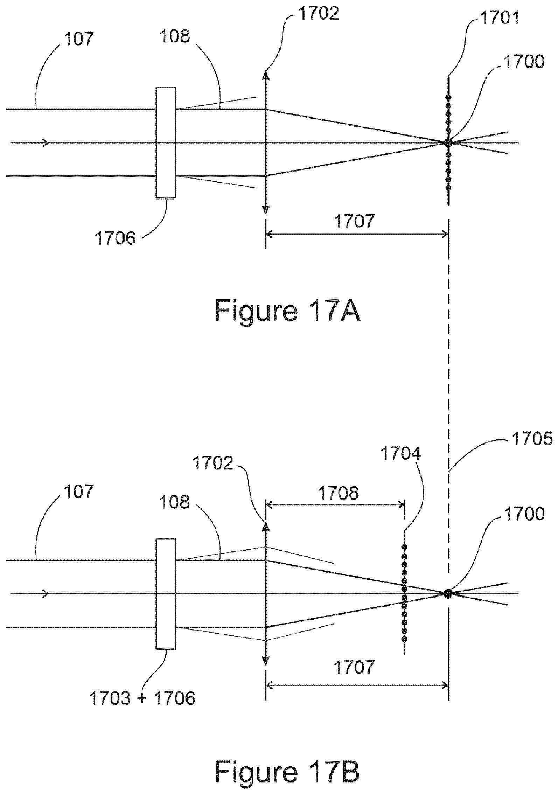

Figures 17A and 17B show two illustrations of a laser primary beam **107** and a reconstruction plane **1701, 1704,** whereby the reconstruction plane **1701** is distant by a reconstruction length **1707** from the SLM **1706,** figure 17A showing a configuration in which a zeroth order **1700** contributes principally to an over-powering in the engraving (engraving not illustrated), and figure 17B showing a shifted position of the reconstruction plane **1704,** where the beams of first order contribute principally to the engraving (engraving not illustrated).

Referring to figure 17A, ideally, all energy from the laser primary beam that is affected by the SLM would be rearranged in the desired distribution. Unfortunately, some portion of the energy will be left unaffected because the SLM **1706** has spaces between each pixel (not illustrated in figure 17) where light is scattered and not perfectly controlled. This part of light and other parts of light that are not controlled will contribute to the apparition of the zeroth order **1700** in a Fourier plane **1705** / reconstruction plane **1701** of the reconstruction lens **1702.**

To solve this issue, we may use for example either one of two methods.

The first method (not illustrated) consists in removing as much light as possible that is left unaffected by the SLM display using a polarizing beam splitter. This polarizing beam splitter rejects light with a vertical polarization if the SLM display is configured to work on horizontally polarized light.

The second method illustrated in figure 17B consist in adding a Fresnel phase of a Fresnel lens **1703** to the computed phase from the Gerchberg-Saxton algorithm. This Fresnel phase will move a plane **1704** where the split beams are reconstructed away from the Fourier plane **1701** of the reconstruction lens **1702,** in the case of figure 17B at a new reconstruction length **1708** from the reconstruction lens **1702.**

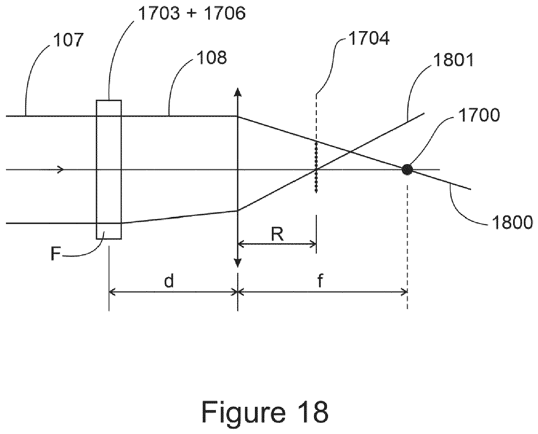

Figure 18 illustrates a further example of a use of a Fresnel phase with the Fresnel lens **1703** at the SLM **1706** in order to shift the reconstruction plane **1704** in respect to the zeroth order **1700** of created split beams. Figure 18 further illustrates a beam **1800** contributing to the zeroth order, and a beam **1801** contributing to the split beam distribution.

The new position of the shifted reconstructed plane **1704** can be calculated using the following formula:

(new distance from reconstruction lens) = (reconstruction lens focal length) x ((Fresnel focal length) - 1) / (reconstruction lens focal length + Fresnel focal length – distance between SLM and reconstruction lens)

$$R = f\,(F-d) / (f + F - d)$$

## Power controlling device

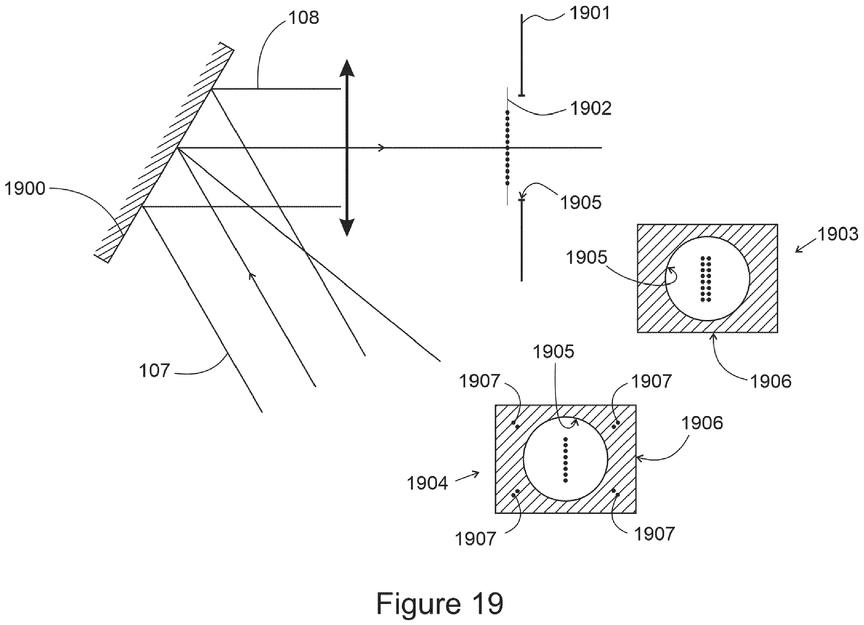

Figure 19 illustrates a power control mechanism comprising a beam masking device according to an example embodiment. This power control mechanism is a preferred embodiment of the power control mechanism **218, 219** illustrated in figure 2.

The power control mechanism has a goal of adjusting the power of the split beam distribution so that the engraving is done with similar fluence over all the split beams.

The primary laser beam **107** on a SLM head **1900** has a constant power and the split beam power distribution in the plurality of split beam **108** depends on the number of split beams that are reconstructed. A given number of split beams gives a specific fluence for each split beams. If we desire to change the number of split beams, e.g., to engrave with fewer split beams simultaneously, and the laser power stays the same, the power distribution between the split beams changes and each split beam either has a larger fluence or a lower fluence than the in other distributions.

To solve this issue, we may introduce a masking device **1901.** This masking device **1901** is in a position that coincides with the reconstruction plane **1902.** The power of the laser (laser not illustrated) may be set using either the internal power or a power regulator such as the power regulator **201** illustrated in figure 2 or for example an optical modulator so that the desired fluence per split beam is reached when the largest distribution of split beam is used.

When engraving with a different number of split beams, in order to compensate the power, we keep the same number of split beams in the reconstruction plane **1902** but we shift the position of the undesired split beams into areas that will be blocked by the masking device **1901.**

Eventually, as already mentioned herein above, it could also be possible to adjust the power of the split beam distribution by changing the power of the laser or by controlling the optical modulator. But these two options are relatively slow and can introduce some delay in the engraving process.

When using the power control device, the only step that is required is to compute the phase of the split beam distribution by taking into consideration the split beams that need to be masked. When displaying the new phase for the new distribution, the power adjustment is performed on the spot with no additional delay. The references **1903** and **1904** illustrate examples of power control wherein different phases of the beam distribution lead to different beams being masked. Reference **1905** points to a border of the masking device **1905,** while reference **1906** indicates a border of the reconstruction plane **1902.** In the example **1903** the phase is set by the SLM to have 16 beams distributed over 2 parallel lines in the area of the reconstruction plane delimited by the border of the masking device **1905.** In the example **1904** the phase set by the SLM is changed such that merely 8 beams distributed over one straight line are reconstructed in the area of the reconstruction plane delimited by the by the border of the masking device **1905.** The remaining 8 beams are reconstructed on the masking device in pairs **1907** thereby reducing the overall power for engraving because the remaining 8 beams are effectively blocked.

**Positioning device**

The positioning device such as for example the positioning device **114** illustrated in figure 2, is configured to hold the workpiece and move the workpiece in front of the microscope objective lens or the optical set-up as a whole.

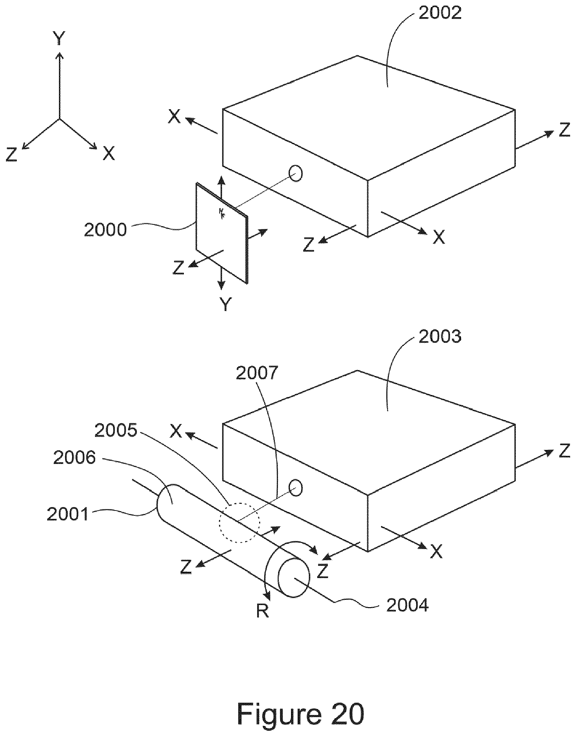

Referring to figure 20, two further embodiments of the set-up, the positioning device may be distributed between a plane workpiece **2000** in the upper part of figure 20 or a cylindrical workpiece **2001** in the lower part of figure 20, and the whole optical setup **2002** and **2003** respectively. For instance, the optical setup **2002** or **2003** would be allowed to translate on a horizontal axis X while the workpiece **2000** may either move along a vertical axis Y when engraving a plate, and the cylindrical workpiece **2001** would be on a rotational axis **2004** to rotate in direction R when engraving a roller.

One or two axes in combination control the distance in **Z** direction between the focusing head (not illustrated in figure 20) and the workpiece by either moving the optical setup **2002, 2003** or the workpiece **2000, 2001** or a combination of both.

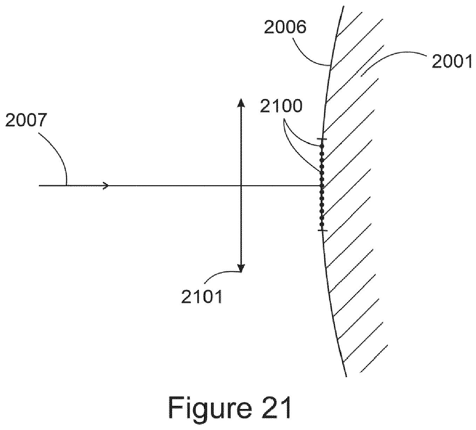

A circle of dashed line **2005** indicates a location on a surface **2006** of the cylindrical workpiece **2001** where a light **2007** from the optical setup **2003,** comprises split beams and the autofocus probe beam (split beams and probe beam not illustrated) which impact the surface **2006** in their respective focus. This is explicated in figure 21, where the respective foci **2100** of the split beams are illustrated at the surface **2006** of the cylindrical workpiece **2001.** The focus of the focused autofocus probe beam is not illustrated in figure 21. A microscope objective lens **2101** from the optical setup **2003** (not illustrated in figure 21) is configured to focus the split beam **2007** and the autofocus probe beam.

The motion of the axes preferably meets an accuracy with a maximum tracking error of +/- 5 μm over 100 mm and repeatability of +/- 10 μm over the whole travel distance.

The axes may further be configured to move the surface of the workpiece **2000, 2001** at a speed greater than 10 mm/s, typically below 10 m/s. The engraving speed depends upon the laser frequency, the focusing spot diameter and the desired distance between two laser pulses with the following formula:

$$\text{(distance between two pulses)} = \text{(surface speed)} / \text{(laser frequency)}$$

**Examples of preferred use cases of the invention**

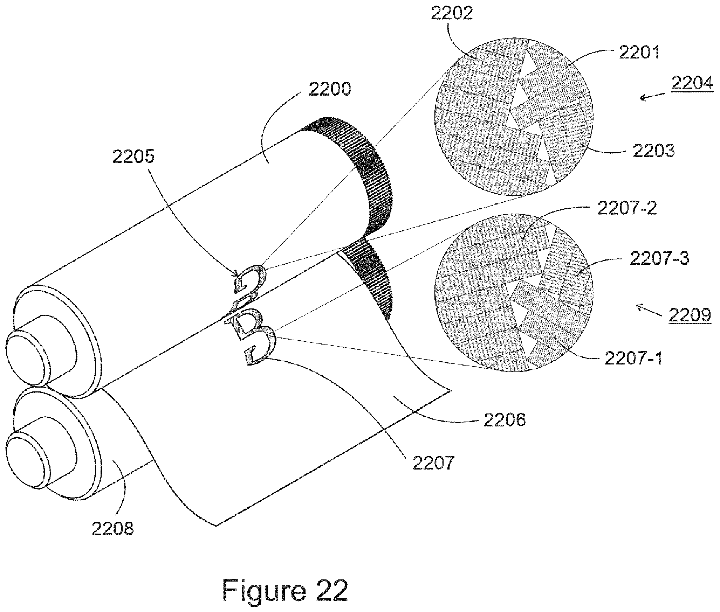

As illustrated for a first example of preferred use case in figure 22 a workpiece may be an embossing roller **2200** having an axial cylindrical symmetry, e.g., a steel roller having a diameter between 10 mm and 250 mm and a length between 50 mm and 1500 mm. The embossing roller **2200** may be structured with an engraved pattern **2205** on its lateral surface according to the invention, so that diffraction gratings **2201, 2202, 2203** are engraved on its lateral surface as illustrated in a magnified view **2204** of the engraving **2205.** The embossing roller **2200** may be used as an embossing tool in order to engrave products such as a foil **2206** and obtain an embossed pattern **2207,** with embossed diffraction gratings or gratings constituting a computer-generated hologram **2207-1, 2207-2, 2207-3** as represented in a magnified view **2209** of the embossing, corresponding to diffraction gratings **2201, 2202, 2203.** The embossed diffraction gratings may be used to fulfil purposes of for example aesthetics, design, authentication, brand communication, etc. The so engraved embossing roller **2200** may be mounted in an embossing set-up (not illustrated in figure 22), for instance a set-up with two rollers, the engraved embossing roller **2200** and a counter-roller **2208,** whereas the latter is slick in the here depicted example.

This preferred use case of the invention is appropriate for the fine embossing of thin films or thin packaging foils having a thickness in an approximate range from 5 μm to 500 μm using the rotational process as illustrated in figure 22. It is well known in the food industries, pharmaceuticals, commodity goods, tobacco industry, luxury, and so on, to emboss thin packaging films and foils using rotational embossing rollers. Such thin packaging foils may be intended to be wrapped around a bunch of cigarettes or reduced risk tobacco products, or to be used as packaging material for coffee or tea tabs, for chocolate, butter or similar food products, as well as in pharmaceuticals, fragrances, electronics, jewelry or watches. The embossed thin film or foil may for example be any one of the list comprising a metal foil, a metal foil laminated with organic substrates, a plastic film laminated with organic substrates such as paper, a polymer film laminated with organic substrates such as paper, a metallized polymer film, a polymer film, a hybrid polymer film, or hybrids in general.

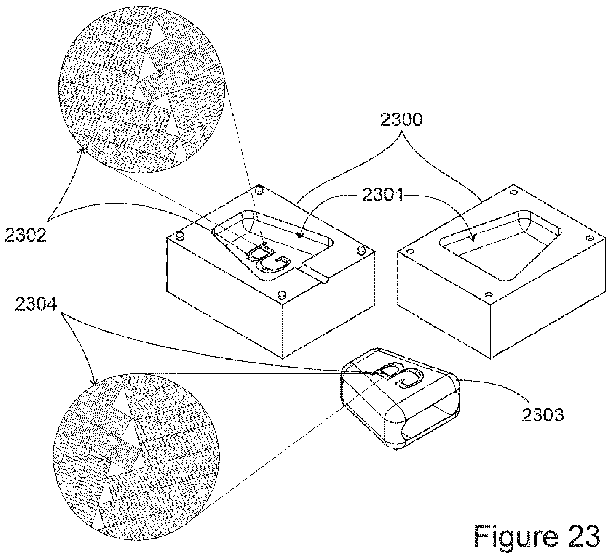

Figure 23 depicts a second preferred use case example of the invention, in which a workpiece **2300** whose lateral dimensions, i.e., length, width, height, may be smaller than 200 mm, which presents at least a cavity **2301,** and which may be used as injection molding die, is structured according to the invention, in order to fulfil aesthetics, design, authentication, brand communication, etc. purposes for objects that will be made using the molding die.

This preferred second use case example of the invention is appropriate for the transfer of the engraved diffraction gratings **2302** into a molten polymer **2303** by injection molding, whereas the molten polymer completely fills the at least one cavity **2301** of the workpiece **2300** and upon cooling solidifies and builds accordingly a plastic part having the shape of the at least one cavity and the transferred diffraction gratings **2304** on its outer surface. The polymer may for example be any one of the lists comprising polycarbonate, polypropylene, polystyrene, PMMA, a hybrid polymer grade or hybrids in general.

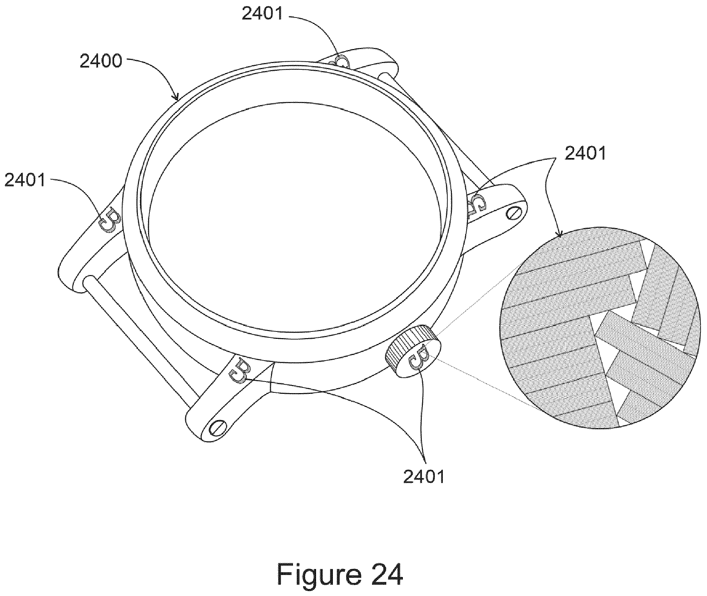

Figure 24 depicts a third preferred use case example of the invention, in which a workpiece **2400,** whose lateral dimensions, i.e., length, width, height, may be smaller than 100 mm, and which may be used as a jewelry part, as a watch component, for example as a wristwatch case.

At least a diffraction grating **2401** may be engraved using a device according to the invention on the outer surface of the workpiece **2400** to fulfill purposes of for example aesthetics, design, authentication, brand communication, etc. The workpiece **2400** is preferably metallic, for example of steel, of a gold alloy, of platinum, or of any noble metal alloy and its outer surface may exhibit a surface roughness that is better than the N2 finishing grade.

According to the invention, an engraved pattern **2401** may consist of diffraction gratings or gratings constituting a computer-generated hologram that are engraved on specific elements of the workpiece **2400.**

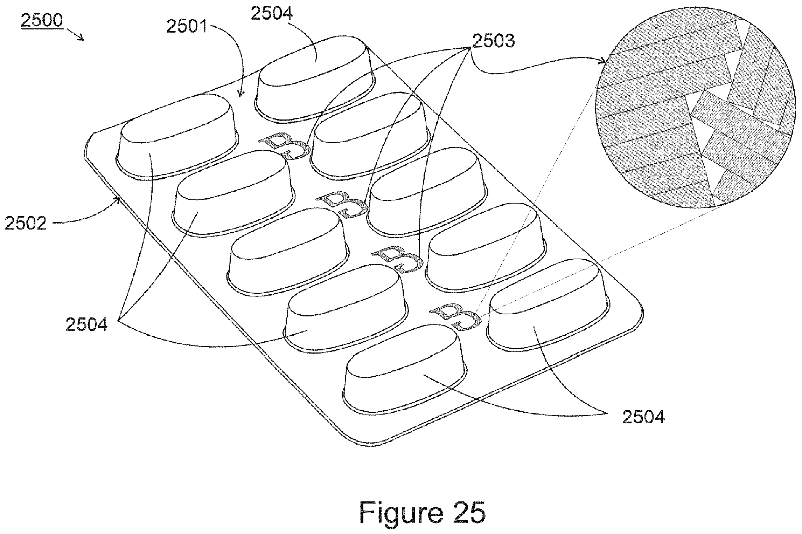

Figure 25 illustrates a further preferred use case example of the invention, in which diffractive gratings or gratings constituting a computer-generated hologram are engraved onto a roller (not depicted in the figure) and then transferred, in a manner as depicted in figure 22, to a component film of a blister package **2500.** Blister packages are used in various industries, such as pharmaceuticals, food, tobacco, etc. and consist mainly of a polymer-based film **2501,** for instance coated PET with a thickness between 50 $\mu$m and 150 $\mu$m, and a metallic-based film **2502,** for instance aluminum foil with a thickness between 20 $\mu$m 50 $\mu$m, and that are sealed together, so that pouches **2504** for a product to be packed are constituted. At least one of the polymer-based film **2501** or the metallic-based film **2502** may be embossed using a roller engraved according to the invention, as depicted in figure 22, so that the at least one film embeds engraved patterns **2503** containing diffraction gratings or gratings constituting a computer-generated hologram, in order to fulfil aesthetics, design, authentication, brand communication, etc. purposes.

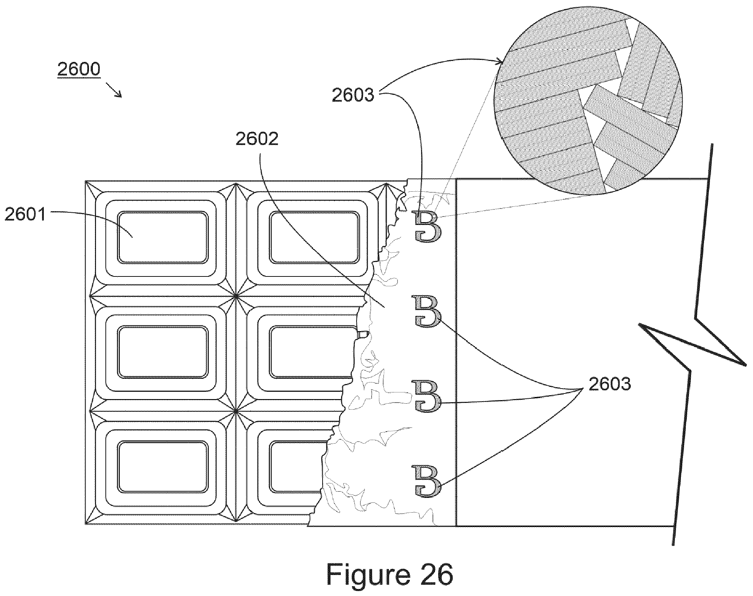

Figure 26 illustrates a further preferred use case example of the invention, in which diffractive gratings or gratings constituting a computer-generated hologram are engraved onto a roller (not depicted in the figure) and then transferred, as depicted in figure 22, to a metallic-based film **2602,** for instance an aluminum film with a thickness between 5 $\mu$m and 25 $\mu$m, belonging to a food package **2600,** wrapping and preserving a food product **2601,** for instance chocolate.

The metallic-based film **2602** may be embossed using a roller engraved according to the invention, as depicted in figure 22, so that it embeds engraved patterns **2603** containing diffraction gratings or gratings constituting a computer-generated hologram, in order to fulfil aesthetics, design, authentication, brand communication, etc. purposes.

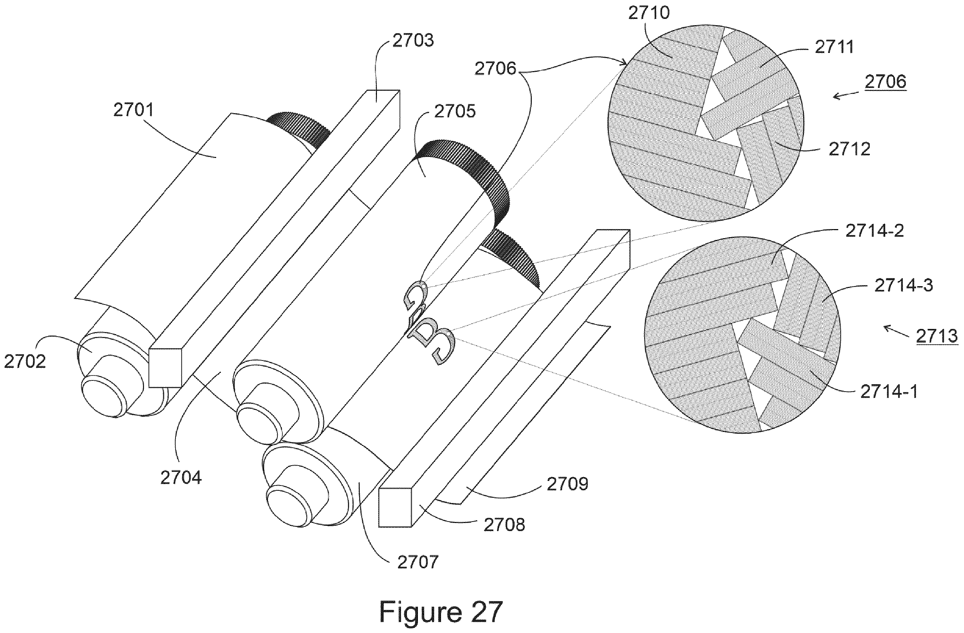

A further example of preferred use case is explained in figure 27. On a roller **2705** diffraction gratings or gratings constituting a computer-generated hologram are engraved according to the invention and the roller **2705** is used in connection with a film **2701,** which can be any one of the list comprising a metal foil, a metal foil laminated with organic substrates, a plastic film laminated with organic substrates such as paper, a polymer film laminated with organic substrates such as paper, a metallized polymer film, a polymer film, a hybrid polymer film, or hybrids in general. The film **2701** is guided by a guiding roller **2702** in front of a unit **2703,** which deposes onto the film **2701** a transparent or semi-transparent organic material, for instance a resin or a lacquer that can be cured using IR- or UV-radiation, and pre-cures it to a film **2704** bearing a pre-cured polymer coating.

The film **2704** is guided between the engraved roller **2705** bearing the engraved pattern **2706** containing diffraction gratings **2710, 2711, 2711** or gratings constituting a computer-generated hologram and a slick roller **2707.** The engraved pattern **2706** is embossed into the film **2704,** which then passes in front of a final curing station **2708.** As a result, a film **2709** consisting of the film **2701** and of a cured transparent or semi-transparent organic material bearing the embossing **2713** of the engraved pattern **2706** containing diffraction gratings **2714-1, 2714-2, 2714-3** or gratings constituting a computer-generated hologram in order to fulfil aesthetics, design, authentication, brand communication, etc. purposes is obtained.

## Claims

**1.** A device for engraving a diffraction grating on a workpiece, comprising

an optical set-up comprising a laser (102), a beam forming device (103), a beam splitting device (104), and a focusing head (105);
the laser (102) configured to output a laser beam (106);

the beam forming device (103) configured to control a diameter of and a light intensity distribution in the laser beam (106), and output a primary laser beam (107);
the beam splitting device (104) configured for a splitting of the primary laser beam (107) into a plurality of split beams (108) for the engraving;
the focusing head (105) comprising

a microscope objective lens (109) configured to focus the respective split beams in respective foci on the workpiece (101),
an auto-focusing system (110) configured to produce a positioning signal for adjusting and maintaining a distance between the microscope objective lens (109) and the workpiece (101) in order to maintain the respective foci of the split beams on the workpiece (101) and output the positioning signal; and
a micro-actuator (111) configured to receive the positioning signal and adjust the distance between the microscope objective lens (109) and the workpiece (101), whereby the auto-focusing system and the micro-actuator are operationally connected in a closed-loop;

a positioning device (114) configured to perform a relative positioning between the workpiece (101) in the respective foci of the split beams, and the optical set-up; and
a controller (115) configured to control the positioning device (114) and the laser (102) according to engraving instructions for the diffraction grating.

**2.** The device for engraving of claim 1, further comprising
a power regulator (201) comprising an optical modulator configured to adjust a power of the laser beam (106).

**3.** The device for engraving of any one of claims 1 and 2, further comprising
an engraving power control device configured to selectively mask at least one of the plurality of split beams, thereby limiting a total beam power incident on the workpiece to that of non-masked split beams.

**4.** The device for engraving of any one of claims 1 to 3, wherein the beam splitting device comprises a Spatial Light Modulator (SLM).

**5.** The device for engraving according to any one of claims 1 to 4, wherein
the auto-focusing system comprises

a probe light source emitting a probe light beam, the probe light source being configured as a low coherence light source and the probe light source being further configured to direct the probe light beam to the workpiece through the microscope objective lens;
an interferometry set-up comprising a reference path and a measuring path, configured to receive as the measuring path the probe light beam after reflection on the workpiece, and the reference path being obtained by sending the probe light beam over a determined path comprising a reference lens configured to mimic the microscope objective lens and a mirror configured to mimic the workpiece, further whereby the reference path is of a given fixed predetermined length such that the difference between the reference path's given fixed predetermined length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum;
an optical spectrometer configured to read the interference spectrum output of the interferometry set-up and output an optical spectrum;
a computing unit configured to input the optical spectrum from the optical spectrometer, analyze it and compute positioning data;
a micro-actuator configured to move the microscope objective lens; and
a digital/analog converter receiving the positioning data and outputting a driving signal to the micro-actuator in order to maintain the workpiece in the respective foci of the split beams.

**6.** The device for engraving according to any one of claims 1 to 4, wherein
the auto-focusing system comprises

a probe light source emitting a probe light beam, the probe light source being configured as a low coherence light source and the probe light being further configured to direct the probe light beam to the workpiece through the microscope objective lens;

an interferometry set-up comprising a reference path and a measuring path, configured to receive as the measuring path the probe light beam after reflection on the workpiece, and the reference path being obtained by sending the probe light beam over a determined path comprising a reference lens configured to mimic the microscope objective lens and a mirror configured to mimic the workpiece, further whereby the reference path is of a given fixed predetermined length such that the difference between the reference path's given fixed predetermined length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum;

an optical spectrometer configured to read the interference spectrum output of the interferometry set-up and output an optical spectrum;

a computing unit configured to input the optical spectrum from the optical spectrometer, analyze it and compute positioning data;

a micro-actuator configured to move the positioning device; and

a digital/analog converter receiving the positioning data and outputting a driving signal to the micro-actuator in order to maintain the workpiece in the respective foci of the split beams.

**7.** A method for engraving a diffraction grating on a workpiece, comprising

providing a laser beam (300);

forming (301) the laser beam by controlling a diameter and a light intensity distribution in the laser beam, and output a primary laser beam;

splitting (302) the primary laser beam into a plurality of split beams for engraving;

focusing (303) the respective split beams on the workpiece with a microscope objective lens;

auto-focusing (304) the respective split beams by producing a positioning signal for adjusting and maintaining a distance between the microscope objective lens and the workpiece in order to maintain the respective foci of the split beams on the workpiece, outputting the positioning signal;

receiving (305) the positioning signal at the input of a micro-actuator and performing with the micro-actuator (305) an adjustment of the distance between the microscope objective lens and the workpiece, whereby the autofocusing and the adjustment of the distance are performed in a closed-loop;

performing (306) a relative positioning between the workpiece in the respective foci of the split beams, and the optical setup by means of a positioning device, and controlling (306) the positioning device and the laser according to engraving instructions (307) for the diffraction grating and engraving the diffraction grating (308) on the workpiece.

**8.** The method for engraving of claim 7, further comprising a step of
adjusting a power of the laser beam by means of a power regulator that comprises an optical modulator.

**9.** The method for engraving of claim 7 or 8, further comprising a step of
controlling an engraving power by selectively masking at least one of the plurality of split beams, thereby limiting a total beam power incident on the workpiece to that of non-masked split beams.

**10.** The method for engraving of any one of claims 7 to 9, wherein
the splitting of the primary laser beam into a plurality of split beams for engraving comprised employing a Spatial Light Modulator (SLM).

**12.** The method for engraving according to any one of claims 7 to 10, wherein
the step of auto-focusing comprises

emitting a probe light beam with a probe light source, the probe light source being configured as a low coherence light source, the emitting comprising a directing of the probe light beam to the workpiece through the microscope objective lens;

implementing an interferometry set-up with a reference path and a measuring path, whereby the probe light beam is directed in the measuring path to pass through the microscope objective lens and to reflect on the workpiece, and the probe beam is further split and directed in the reference path by sending the probe light beam over a determined path that comprises a reference lens configured to mimic the microscope objective lens and a mirror configured to mimic the workpiece, further whereby the difference between the reference path length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum;
reading the interference spectrum output of the interferometry set-up by means of an optical spectrometer and outputting an optical spectrum;
inputting the optical spectrum from the optical spectrometer in a computing unit and analyzing it and compute positioning data;
moving the microscope objective lens by means of a micro-actuator; and
receiving the positioning data in a digital/analog converter and outputting a driving signal to the micro-actuator in order to maintain the workpiece in the respective foci of the split beams.

**13.** The method for engraving according to any one of claims 7 to 10, wherein
the step of auto-focusing comprises

emitting a probe light beam with a probe light source, the probe light source being configured as a low coherence light source, the emitting comprising a directing of the probe light beam to the workpiece through the microscope objective lens;
implementing an interferometry set-up with a reference path and a measuring path, whereby the probe light beam is directed in the measuring path to pass through the microscope objective lens and to reflect on the workpiece, and the probe beam is further split and directed in the reference path by sending the probe light beam over a determined path that comprises a reference lens configured to mimic the microscope objective lens and a mirror configured to mimic the workpiece, further whereby the difference between the reference path length and a measurement path length is smaller than the spatial coherence length of the low coherence light source, further whereby the interferometry set-up is configured to combine a reference light beam exiting from the reference path and a measurement light beam exiting from the measurement path in order for these to interfere and output an interference spectrum;
reading the interference spectrum output of the interferometry set-up by means of an optical spectrometer and outputting an optical spectrum;
inputting the optical spectrum from the optical spectrometer in a computing unit and analyzing it and compute positioning data;
moving the positioning device by means of a micro-actuator; and
receiving the positioning data in a digital/analog converter and outputting a driving signal to the micro-actuator in order to maintain the workpiece in the respective foci of the split beams.

100
101
102
103
104
105
106
107
108
109
110
111
112
113
114
115
d

Figure 1

200
102
106
207
212
208
201
210
206
213
103
214
107
215
209
108
216
218
219
217
220
109
105
110
221
101
114
211
222
223

Figure 2

300
301
302
303
304
305
307
306
308

Figure 3

402
401
405
404
403
407
406
400
Out of focus
In focus

Figure 4A (Prior Art)

401
405
403
404
407
408
400
406

Figure 4B (Prior Art)

501
503
504
502

Figure 5

503
501
502
503
501
602
601
502
m
603
503
502
601
n+m

Figure 6A

Figure 6B

Figure 6C

501
502
503
701
702
703
m
n+m

Figure 7A

Figure 7B

Figure 7C

804
801
803
100 µm
802

Figure 8 (Prior Art)

902
903
100 µm
901

Figure 9

1000
Intensity
Δλ
0
Wavelength
1001
1002
a
a+b
1009
b
1004
1006
1003
1005
1011
1010
Intensity
0
Wavelength
1007
1015
1008
1016
1014
1013
Intensity
0
Position
1012

Figure 10

1013
1100
1011
1101
1014
1009
a+b
1000
108
112
a
1006
b
1005
1015
1007
1008

Figure 11

1200
1203
1201
0d
1204
1202
1201

Figure 12

1302
FWHM3
Intensity
107
214
FWHM2
1301
Intensity
213
FWHM1
1300
103
206
Intensity

Figure 13

108
216
217
1400
1402
1401
107

Figure 14

1500
216
217
1501
108
107
1402

1502
216
1503
108
217
1402
107

Figure 15

1600
φ for initial loop
1601
A
A+iφ
φ = SLM phase
1609
S'+iφ
1602
A'+iφ'
1603
φ'
1604
S
1605
S+iφ'
1606
1607
1608

Figure 16

1702
1701
107
108
1700
1706
1707
Figure 17A
1705
1704
1702
107
1708
108
1700
1707
1703 + 1706
Figure 17B

1703 + 1706
107
1704
108
1801
1700
1800
R
F
d
f

Figure 18

1903
1906
1905
1901
1902
1905
1906
1907
1907
1905
1907
1907
1904
108
107
1900

Figure 19

2002
Y
X
Z
Z
X
2000
Z
X
Z
Y
2003
2007
2005
X
2006
Z
2001
Z
X
Z
R
2004

Figure 20

2006
2001
2100
2007
2101

Figure 21

2204
2201
2203
2209
2207-3
2207-2
2207-1
2202
2206
2207
2200
2205
2208

Figure 22

2300
2301
2302
2303
2304

Figure 23

2401
2401
2401
2400
2401


Figure 24

2500
2501
2502
2503
2504
2504
2504

Figure 25

2600
2601
2602
2603
2603


Figure 26

2701
2702
2703
2704
2705
2706
2707
2708
2709
2710
2711
2712
2706
2713
2714-1
2714-2
2714-3

Figure 27

# EUROPEAN SEARCH REPORT

Application Number
EP 21 17 4614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 132 758 A1 (SHAO XIAOJING [CN]) 12 September 2001 (2001-09-12)<br>* paragraphs [0013], [0025], [0028], [0029], [0033] - [0035], [0040]; figure 1 * | 1-4,7-10<br>5,6,12, 13 | INV.<br>B23K26/03<br>B23K26/046<br>B23K26/04<br>B23K26/06<br>B23K26/067<br>B23K26/08<br>B23K26/352<br>B23K26/362<br>B42D25/435<br>G02B5/18<br><br>ADD.<br>B23K37/04<br>B23K103/04<br>B23K103/00 |
| A | US 2001/013959 A1 (LONG MICHAEL D [US]) 16 August 2001 (2001-08-16)<br>* paragraphs [0045], [0055]; figure 1 * | 1-10,12, 13 | |
| Y | CN 107 876 998 A (UNIV FOSHAN) 6 April 2018 (2018-04-06)<br>* see also inofficial translation; figure 1 * | 6,13 | |
| Y | DE 10 2013 008269 A1 (PRECITEC OPTRONIK GMBH [DE]) 20 November 2014 (2014-11-20)<br>* paragraphs [0016], [0027], [0051]; figures 2,3 * | 5,12 | |
| A | DE 10 2012 212278 B4 (ARGES GMBH [DE]) 15 December 2016 (2016-12-15)<br>* paragraphs [0018] - [0024], [0033], [0040], [0041] * | 1-10,12, 13 | TECHNICAL FIELDS SEARCHED (IPC)<br>B23K<br>B42F<br>B42D<br>G02B |

The present search report has been drawn up for all claims

1

| Place of search | Date of completion of the search | Examiner |
|---|---|---|
| Munich | 25 November 2021 | Kramer, Ellen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 17 4614

This annex lists the patent family members relating to the patent documents cited in the above-mentioned European search report. The members are as contained in the European Patent Office EDP file on
The European Patent Office is in no way liable for these particulars which are merely given for the purpose of information.

25-11-2021

| Patent document cited in search report | Publication date | Patent family member(s) | Publication date |
|---|---|---|---|
| EP 1132758 A1 | 12-09-2001 | AU 1026700 A | 22-05-2000 |
| | | EP 1132758 A1 | 12-09-2001 |
| | | WO 0026702 A1 | 11-05-2000 |
| US 2001013959 A1 | 16-08-2001 | AT 285589 T | 15-01-2005 |
| | | CA 2267316 A1 | 09-04-1998 |
| | | DE 69732042 T2 | 15-12-2005 |
| | | EP 0934540 A1 | 11-08-1999 |
| | | EP 1515166 A2 | 16-03-2005 |
| | | US 5986781 A | 16-11-1999 |
| | | US 6222650 B1 | 24-04-2001 |
| | | US 2001013959 A1 | 16-08-2001 |
| | | US 2003161042 A1 | 28-08-2003 |
| | | WO 9814805 A1 | 09-04-1998 |
| CN 107876998 A | 06-04-2018 | NONE | |
| DE 102013008269 A1 | 20-11-2014 | CA 2912135 A1 | 20-11-2014 |
| | | DE 102013008269 A1 | 20-11-2014 |
| | | US 2016059347 A1 | 03-03-2016 |
| | | US 2020001395 A1 | 02-01-2020 |
| | | WO 2014183849 A1 | 20-11-2014 |
| DE 102012212278 B4 | 15-12-2016 | DE 102012212278 A1 | 16-01-2014 |
| | | WO 2014009150 A1 | 16-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090212030 A1